(19) **Europäisches Patentamt European Patent Office Office européen des brevets**

(11) **EP 2 390 048 B1**

(12) **EUROPEAN PATENT SPECIFICATION**

(45) Date of publication and mention of the grant of the patent:
**16.07.2014 Bulletin 2014/29**

(21) Application number: **10731345.4**

(22) Date of filing: **14.01.2010**

(51) Int Cl.:
*B23K 31/00* (2006.01)   *B23K 9/23* (2006.01)
*B23K 103/04* (2006.01)   *B23K 9/02* (2006.01)

(86) International application number:
**PCT/JP2010/050654**

(87) International publication number:
**WO 2010/082676 (22.07.2010 Gazette 2010/29)**

(54) **WELDING STRUCTURE WITH EXCELLENT RESISTANCE TO BRITTLE CRACK PROPAGATION**

SCHWEISSSTRUKTUR MIT HERVORRAGENDEM WIDERSTAND GEGEN SPRÖDHEITSRISSAUSBREITUNG

STRUCTURE DE SOUDAGE DOTÉE D'UNE EXCELLENTE RÉSISTANCE À LA PROPAGATION DE FISSURE PAR FRAGILITÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.01.2009 JP 2009006037**

(43) Date of publication of application:
**30.11.2011 Bulletin 2011/48**

(73) Proprietor: **Nippon Steel & Sumitomo Metal Corporation Tokyo 100-8071 (JP)**

(72) Inventors:
• **ISHIKAWA, Tadashi Tokyo 100-8071 (JP)**

• **INOUE, Takehiro Tokyo 100-8071 (JP)**
• **HASHIBA, Yuuji Tokyo 100-8071 (JP)**
• **OTANI, Jun Tokyo 100-8071 (JP)**

(74) Representative: **Vossius & Partner Siebertstrasse 4 81675 München (DE)**

(56) References cited:
**EP-A1- 1 674 187    JP-A- 51 062 155 JP-A- 2005 131 708    JP-A- 2005 319 516 JP-A- 2007 302 993    JP-A- 2008 248 382**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 390 048 B1

**Description**

The present invention relates to a welded structure having excellent brittle crack propagation resistance which controls and suppress propagation of a brittle crack when a brittle crack occurs in a welded joint. In particular, it relates to a welded structure having excellent brittle crack propagation resistance which can control and suppress propagation of a brittle crack and improve safety even when a brittle crack occurs in a welded joint of a welded structure formed by welding thick-gauge steel plates.

In recent years, in welded structures for use in large sized container ships, bulk carriers, and other ships and in welded structures such as building structures and steel structures for civil engineering, a high safety has come to be demanded against fracture due to brittle cracks etc. In particular, container ships are becoming remarkably larger in size. For example, 6000 TEU and larger giant container ships are now being produced. The steel plates used for the outer plates of the ship hulls are being made thicker and higher in strength. Steel plates of a plate thickness of 70 mm or more and a yield strength of the 390N/mm$^2$ class or more are becoming used.

Here, "TEU (Twenty feet Equivalent Unit)" expresses size converted to 30 foot length containers and is a parameter indicating the carrying capacity of a container ship. Such a large sized container ship is structured to be improved in carrying capacity and handling efficiency by eliminating the partition walls and enlarging the top opening. In particular, it is therefore necessary to secure sufficient strength of the outer plates and inner plates of the hull. Therefore, the above such high strength steel plates are being used.

When constructing an above such welded structure, to reduce the construction costs and improve the construction efficiency, large heat input welding (for example, electro gas arc welding) is being broadly used. In particular, the greater the plate thickness of the steel plate, the more the welding work hours increase, so it is being demanded to perform welding by large heat input as much as possible. However, when applying large heat input welding to the welding of steel plates, the weld heat affected zone (HAZ) falls in toughness and the HAZ increases in width, so the value of the fracture toughness against brittle fracture tends to fall.

For this reason, to suppress the initiation of brittle cracks in welded joints and achieve arrest of brittle cracks, TMCP (thermo mechanical control process) steel plate having excellent brittle crack resistance characteristics has been proposed. By using this TMCP steel plate, the value of the resistance to the initiation of brittle fracture, that is, the value of fracture toughness, is improved, so in a normal usage environment, the possibility of a structure experiencing brittle fracture becomes extremely low. However, at the time of an earthquake or an accident involving the collision of structures or a fire etc., in the unlikely event of brittle fracture occurring, such a brittle crack will continue propagating through the HAZ and is liable to cause a major fracture in the welded structure.

For example, in a welded structure such as a container ship, TMCP steel plate of a plate thickness of about 50 mm etc. is being used. Even in the unlikely event of a brittle crack occurring in a welded joint, the weld residual stress will result in the brittle crack being diverted from the weld zone to the base metal side, so it had been believe that if securing the crack arrest performance of the base metal, the brittle crack could be arrested at the base metal. Further, in over 6000 TEU large-sized container ships and other further larger size welded structures, steel plate of larger plate thickness has become necessary. Furthermore, to streamline the structure, increasing the thickness of the steel plate is effective, so it had been demanded to use thick-gauge steel plate of high strength steel with a high design stress. However, when using such thick-gauge steel plate, depending on the degree of fracture toughness of the HAZ, a brittle crack is liable to be propagated along the HAZ without being diverted to the base metal.

To solve this problem, a welded structure where part of a butt welded joint is repair welded (gouged or back filled) to divert a brittle crack which propagates along the HAZ to the base metal side has been proposed (for example, JP-A-2005-131708). However, the welded structure of PLT 1 is effective for the case where the fracture toughness of the base metal is extremely excellent, but when the fracture toughness of the base metal is insufficient, a brittle crack which is diverted to the base metal side propagates long and the strength of the structure is liable to remarkably fall. Further, there are the problems that the volume of the back filled weld zone becomes large, the process time becomes long, and the production costs increase.

Further, a welded structure wherein, in a region where it is desired to arrest a brittle crack which occurs in a welded joint, a plate-shaped insert material is welded so as to run intersecting the weld line and, as the insert material, one given a suitable texture at the front layer region of a thickness of a plate thickness ratio of the front surface or back surface of 2% or more is used has been proposed (for example, JP-A-2007-098441). However, if using the welded structure described in PLT 2 for a large-sized building, for example, a brittle crack which propagates along the welded joint will propagate through the welded joint formed by welding the insert material to the steel plate and is liable to enter the insert material, propagate through the inside of the insert material as is, and again propagate through the welded joint. On the other hand, if a brittle crack which propagates through a welded joint is diverted to the base metal side at a position of the insert material and the welded joint which welds the insert material to the steel plate, in the same way as the above, if the base metal is insufficient, there may be the problem of a brittle crack propagating long and the strength of the welded structure remarkably falling.

JP-A-2005-319516 discloses a welded structure and a method for welding the welded structure, in which, even in the case of a steel plate with a plate thickness of ≥70 mm and brittle cracks are generated at a welded joint, the propagation of the brittle cracks is prevented at the weld zone, and the fatal fracture of the welded structure can be prevented. In the method for welding a welded structure the vertical member and weld metal in the region are scooped out, thereafter, an arrester material capable of stopping the brittle cracks is inserted into the part, and the arrester material is welded.

Therefore, the present invention has as its object the provision of a welded structure having excellent brittle crack propagation resistance which can keep a brittle crack from propagating through a welded joint and as a result can prevent fracture of the welded structure even when a brittle crack occurs in a welded joint at the time of an earthquake, collision, etc.

The inventors engaged in intensive research on means able to more reliably prevent cracks even in the case of further larger welded structures in the art of providing an insert member forming a separate member in a region where it is desired to arrest a brittle crack occurring in a welded joint so as to intersect a weld line and thereby prevent the brittle crack from being propagated through the welded joint or the base metal.

As a result, they discovered that by suitably designing the shape of the insert member and the properties of the steel plate, it is possible to suppress propagation of a brittle crack in a welded joint and a base metal and prevent large-scale fracture from occurring in a welded structure and thereby completed the present invention. The object above can be achieved by the features defined in the claims.

Note that, in the present invention, the part including the weld metal zone and the weld heat affected zone is defined as the "welded joint". Further, the "brittle crack arrest property Kca" is the value at the temperature at which the welded structure is used or at the design temperature.

According to the welded structure of the present invention, at least one location of a welded joint is provided with a crack control part which has an insert member and insert welded joints which are formed between that and the base metal steel plate, so even if a brittle crack occurs in a welded joint, the brittle, crack which propagates through the welded joint can be diverted by the crack control part to a location of the steel plate base metal with a high crack arrest performance or can be blocked by the crack control part and therefore the brittle crack can be kept from propagating through the welded joint or the base metal. Therefore, a welded structure which can prevent in advance the occurrence of large-scale fracture can be obtained with a high production efficiency and low cost.

By having such a welded structure according to the present invention used for large-sized shapes first and foremost and also building structures, civil engineering steel structures, and other various types of welded structures, the demands for larger sizes of welded structures, higher safety with respect to fracture, higher efficiency of welding in construction, greater economy of the steel materials, etc. are simultaneously met, so the effect in industry is immeasurable.

The invention is described in detail in conjunction with the drawings, in which:

FIG. 1 gives schematic views which are plan views which show the state where part of a steel plate welded joint formed by welding steel plates together is provided with a crack control part comprising an insert member and insert welded joints and show the state of progression of a brittle crack,

FIG. 2 is a schematic view which explains an example of a welded structure, that is, a plan view which shows the state where part of a steel plate welded joint is provided with a crack control part comprising an insert member and insert welded joints,

FIG. 3 gives views for explaining the shapes of an insert member, in particular, the shapes of outer edges of brittle crack auxiliary countering sides,

FIG. 4 is a schematic view which explains an example of a welded structure, that is, a schematic view which explains the case of application of a welded structure according to the present invention to a ship welded structure,

FIG. 5 is a view similar to FIG. 3 which explains another example of a welded structure,

FIG. 6 is a view which explains an example of a welded structure according to the present invention,

FIG. 7 is a view which explains another example of a welded structure according to the present invention,

FIG. 8 gives views which explain a method of fabrication of a welded joint test piece, and

FIG. 9 gives views which explain a tensile test method for evaluating the resistance to brittle crack propagation in an embodiment of the present invention.

Below, embodiments of a welded structure having excellent brittle crack propagation resistance of the present invention will be explained in detail while referring to the drawings. Note that, the present embodiments are explained in detail for furthering understanding of the gist of the invention, so do not limit the present invention unless particularly indicated otherwise.

In the past, a brittle crack which occurred in a steel plate welded joint mainly propagated along the longitudinal direction of the steel plate welded joint. For this reason, there was the problem that a brittle crack which occurred at a steel plate welded joint formed a starting point liable to cause large fracture in the welded structure as a whole.

The inventors etc. discovered that to effectively control the direction of propagation of such a brittle crack and keep the crack from propagating in the welded structure, it is important to further suitably design the shape of the insert member and the properties of the steel material in the above prior art.

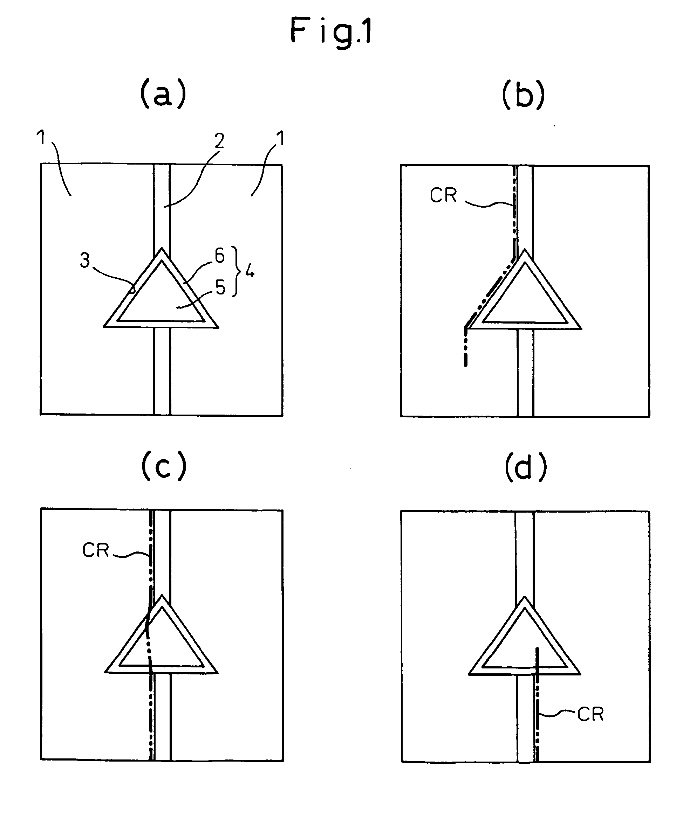

The basic principle of the present invention will be explained using FIG. 1.

In the present invention, in the middle of a steel plate welded joint 2 formed by butt welding the steel plates 1 and 1, a crack control part 4 is provided to split the steel plate welded joint 2. The crack control part 4 comprises an insert member 5 which is inserted into a through hole 3 which is formed from the steel plate welded joint across the steel plates and of insert welded joints 6 which are formed by butt welding of the insert member 5 to the steel plates 1. The insert member 5 is made a shape so as to form insert welded joints 6 which have a main countering side, where propagation of a brittle crack is expected, made slanted with respect to the steel plate welded joint 2. By providing this crack control part 4, the propagation of a brittle crack which occurs in the steel plate welded joint 2 is controlled as follows:

A brittle crack CR which occurs at one side of the steel plate welded joint 2 in the longitudinal direction propagates along a boundary of a steel plate 1 and the steel plate welded joint 2 (or heat affected zone of steel plate base metal). When the crack CR reaches an insert welded joint 6, if the slant angle with respect to the steel plate welded joint 2 is suitable, the crack CR does not enter the insert welded joint 6, but, as shown in FIG. 1(a), propagates along the boundary of the steel plate 1 and insert welded joint 6 (or heat affected zone of steel plate base metal) and reaches the base metal part of the steel plate 1 at the horizontal width direction end of the insert welded joint. At this time, even if entering the base metal part, if the steel plate 1 has a high brittle crack arrest property Kca, the progression of the crack CR can be arrested there. Furthermore, even if a brittle crack CR has propagated from the other auxiliary countering side in the longitudinal direction of the steel plate welded joint 2, if making the insert member 5 sufficiently large in height, width, and thickness, as shown in FIG. 1(d), it is possible to arrest the crack CR inside of the insert member 5.

Conversely to the above, depending on the shape of the insert member 5, as shown in FIG. 1(c), even if a brittle crack passes through the insert member 5 or propagates along the insert welded joint 6, it could again be propagated through the steel plate welded joint without being diverted to the base metal side.

The present invention forms such insert welded joints 6, which are slanted with respect to the steel plate welded joint 2, continuously with the steel plate welded joint 2 so as to guide progression of a brittle crack from the steel plate welded joint 2 to the insert welded joints 6 and, under this basic principle, further studies the conditions of the base metal steel plate which blocks progression of a brittle crack, conditions of the insert member which control progression of a brittle crack, etc. Below, embodiments of the present invention will be explained in detail.

Reference Structure 1 (Outside the scope of the invention)

Overall Constitution

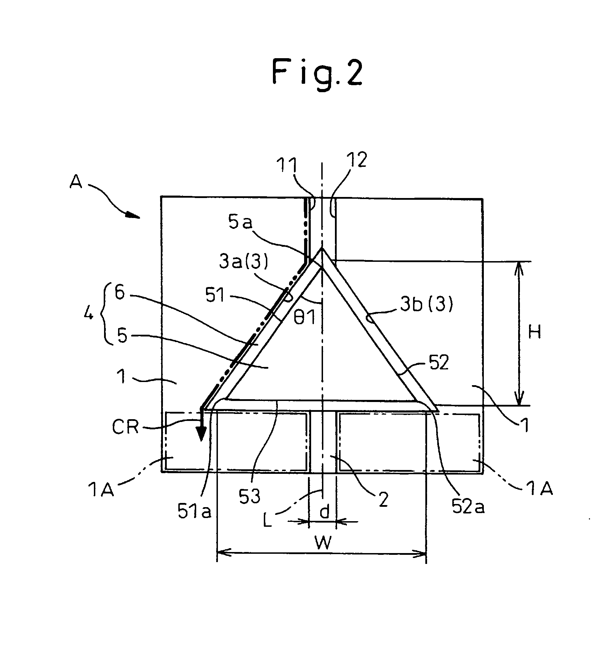

The first structure, as shown in FIG. 2, is an example of a case where a steel plate welded joint 2 is formed by butt welding steel plates 1 and 1 with regions 1A and 1A of at least parts of the base metal with a brittle crack arrest property Kca of $4000N/mm^{1.5}$ or more. Below, the embodiment of application to a joint will be called a "welded structure A" in the explanation.

In the welded structure A, at least one location of the steel plate welded joint 2 is provided with a crack control part 4 so as to adjoin the regions 1A. The position where the crack control part 4 is provided is preferably in the middle of the steel plate welded joint where initiation and propagation of a crack are anticipated when exposed to a large fracture energy due to collision, an earthquake, etc. The crack control part 4 comprises an insert member 5 which is arranged at a through hole 3 which is provided so as to pass through the steel plates 1 and insert welded joints 6 which are formed by butt welding of the insert member 5 to the steel plates 1.

The insert welded joints 6 have a main countering side, where a brittle crack is expected to propagate, formed continuously with the steel plate welded joint 2 and formed slanted with respect to the steel plate welded joint 2 so as to guide progression of a brittle crack from the steel plate welded joint 2 to the insert welded joints. For this reason, the insert member 5 is formed so that outer edges 51 and 52 which extend from the weld line L of the steel plate welded joint 2 are slanted from the longitudinal direction of the steel plate welded joint 2 by an angle of 15° to 50° in range. In the welded structure A of FIG. 2, the example is shown where the insert member 5 is formed as a substantially equilateral triangle when seen from a plan view.

Steel Plates

The steel plates 1 comprise a steel material with at least part of the base metal having a brittle crack arrest property Kca of $4000N/mm^{1.5}$ or more. A welded structure forming a large sized structure is not always constructed using steel materials having entire regions having a brittle crack arrest property Kca in the high region of $4000N/mm^{1.5}$ or more. Steel plates raised in brittle crack arrest property at a partial region of the steel plates by heat treatment in the production process and even steel plates having an entire region with a Kca of $4000N/mm^{1.5}$ or more which fall in Kca at a partial region due to heat treatment in interim bending etc. are sometimes used.

In the welded structure A, as shown in FIG. 2, at the regions 1A at locations outside from the insert welded joints 6 (in FIG. 2, bottom in vertical length direction), the base metal has a brittle crack arrest property Kca made 4000N/mm$^{1.5}$ or more. The insert welded joint 6 which is formed extending from the weld line L of the steel plate welded joint 2 at the back ends 51a and 52a sides of the slanted outer edges 51 and 52 of the insert member 5 is formed so as to adjoin the regions 1A.

The chemical compositions, the metal microstructure, etc. of the steel plates 1 are not particularly limited. It is possible to use steel plates provided with properties which are conventionally known in the fields of ship welded structures, building structures, civil engineering steel structures, etc.

For example, steel having a basic composition including, by mass%, C: 0.01 to 0.18%, Si: 0.01 to 0.5%, Mn: 0.3 to 2.5%, P: 0.01% or less, and S: 0.001 to 0.02%, further including in this composition, in accordance with the performance which is sought, at least one type of element of N: 0.001 to 0.008%, B: 0.0001 to 0.005%, Mo: 0.01 to 1.0%, Al: 0.002 to 0.1%, Ti: 0.003 to 0.05%, Ca: 0.0001 to 0.003%, Mg: 0.001 to 0.005%, V: 0.001 to 0.18%, Ni: 0.01 to 5.5%, Nb: 0.005 to 0.05%, Cu: 0.01 to 3.0%, Cr: 0.01 to 1.0%, and REM: 0.0005 to 0.005%, and having a balance of Fe and unavoidable impurities may be mentioned.

In particular, as steel plate having a brittle crack arrest property Kca of 6000N/mm$^{1.5}$. or more, thick-gauge steel plate of a composition such as shown in Japanese Patent Publication (A) No. 2007-302993, Japanese Patent Publication (A) No. 008-248382, etc. may be suitably used.

As shown in FIG. 2, in the welded structure A, a steel plate welded joint 2 is formed by butt welding the above such steel plates 1 and 1. Further, the steel plates 1 which are joined by this steel plate welded joint 2 are provided with a through hole 3 for positioning of the insert member 5, details explained later, so as to be symmetric at the steel plates 1 about the weld line L of the steel plate welded joint 2.

The plate thickness of the steel plates 1 is preferably made 25 mm to 150 mm in range. If the plate thickness of the steel plates 1 is in this range, it is possible to secure the strength of the steel plates in the welded structure and, as explained in detail later, possible to obtain excellent resistance to brittle crack propagation.

In particular, in a welded structure using 40 mm or thicker steel plates, there is no effective means for arresting a brittle crack. In a welded structure using steel plates with a plate thickness of 40 mm or more, more preferably 50 mm to 100 mm, the present invention is more effectively worked.

Further, in the reference structure 1, at least part of the base metal forming the steel plates 1, in the example shown in FIG. 2, the region 1A, is given a brittle crack arrest property Kca of 4000N/mm$^{1.5}$ or more, but 6000N/mm$^{1.5}$ or more is preferable from the viewpoint of further improvement of the resistance to brittle crack propagation.

Insert Member

The insert member 5, as shown in FIG. 2, is arranged in a through hole 3 formed spanning the steel plates which are joined by the steel plate welded joint 2. It is preferably arranged to be symmetric at the steel plates 1 about the weld line of the steel plate welded joint 2. Further, the insert member 5 forms the crack control part 4 together with the insert weld joints 6 which are formed by butt welding to the weld ends of the steel plates 1 which are exposed inside the through hole 3.

Even if a brittle crack occurs in the steel plate welded joint 2, the insert member 5, by formation of the above-mentioned crack control part 4, controls the propagation route of that crack to extend from the steel plate welded joint 2 to the insert welded joints 6 and prevents the crack from propagating so as to pass through the steel plate welded joint 2 and sever the steel plates 1 and 1 which are welded together.

For this reason, the insert welded joints 6 should be formed continuously from the steel plate welded joint 2 and should be formed by a slant angle θ1 of 15° to 50° in range with respect to the steel plate welded joint 2 at the main countering side where propagation of a brittle crack is anticipated.

In the insert member 5 of the example shown in FIG. 2, the slanted outer edges 51 and 52 extending from the vertex 5a at the main countering side are formed so as to be slanted by an angle θ1 of 15° to 50° in range with respect to the longitudinal direction of the steel plate welded joint 2. Further, the insert member 5 is formed so that the outer edge 53 which forms the auxiliary countering side against a brittle crack is connected to the back ends 51a and 52a of the slanted outer edges 51 and 52, whereby a substantially equilateral triangular shape when seen from a plan view is formed.

By making this slant angle θ1 the above range, even if a brittle crack which propagates through the steel plate welded joint 2 occurs, this crack is guided to progress from the steel plate welded joint along the insert welded joints 6 so it becomes possible to stably divert it to the base metal side of the steel plate 1. As a result, it is possible to effectively arrest a brittle crack and prevent large scale fracture in the welded structure A.

If the angle of the slanted outer edges 51 and 52 of the insert member 5 with respect to the longitudinal direction of the steel plate welded joint is over 50°, this approaches the angle by which the longitudinal direction of the steel plate welded joint and the outer edges perpendicularly intersect, that is, 90°, so a brittle crack which propagates through the steel plate welded joint 2 would be difficult to guide to propagate from the steel plate welded joint along the insert welded joints 6 and the brittle crack which propagates through the steel plate welded joint may enter the insert member 5 as it is. Furthermore, if the crack directly enters the insert member 5, the crack is liable to not be stopped inside of the insert member, but to pass through the insert member and again enter the steel plate welded joint and propagate.

Further, if the angle of the slanted outer edges 51 and 52 of the insert member 5 with respect to the longitudinal direction of the steel plate welded joint is less than 15°, even if causing a crack to propagate along an insert welded joint 6, the position of the crack passing through the insert welded joint becomes close to the position of the steel plate welded joint of the original crack propagation route, so the crack is liable to again enter the steel plate welded joint and propagate. The preferable range of the slant angle θ1 for guiding a brittle crack to propagate along an insert welded joint 6 is 25° to 40°.

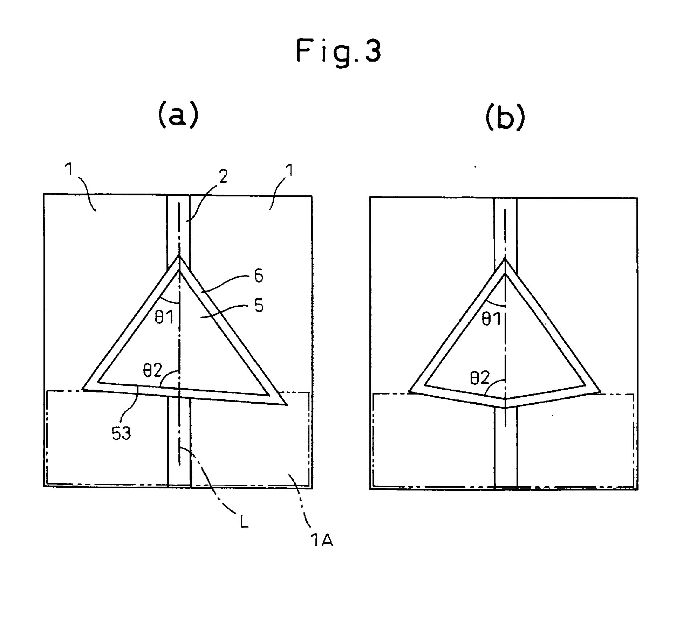

In the welded structure A of FIG. 2, the example was shown where the insert member 5 was formed as an approximately equilateral triangle seen from a plan view, but the shape of the insert member is not limited to this. For example, an isosceles triangle, a triangle asymmetric with respect to the weld line L such as shown in FIG. 3(a), and, furthermore, as shown in FIG. 3(b), even a case where the outer edge 53 at the auxiliary countering side connecting the back ends 51a and 52a of the slanted outer edges 51 and 52 are also included.

In each case, the angle θ2 formed by the outer edge 53 of the auxiliary countering side connecting the back ends 51a and 52a of the slanted outer edges 51 and 52 of the insert member and the weld line L has to be 70° to 110°. If the angle is not in the above range, a brittle crack which has propagated along the insert welded joint 6 is liable to not be diverted to the base metal side of the steel plate, but to propagate along the outer edge 53 at the auxiliary countering side and again enter the steel plate welded joint. A more preferable range of the angle θ2 is 80° to 100°.

Note that, in FIG. 3, θ2 was shown for one side of the weld line L, but the same is true for the other side.

The insert member 5 which is used for the welded structure A must have dimensions of a width W in the direction intersecting the longitudinal direction of the steel plate welded joint 2 and a plate thickness "t" satisfying the relationships which are expressed by the following formulas (1) and (2).

$$3.2d + 50 \leq W \quad \ldots\ldots \quad (1)$$

$$0.95T \leq t \quad \ldots\ldots \quad (2)$$

where, in the above formulas (1) and (2), "T" indicates the plate thickness of the steel plate, while "d" indicates the width of the weld metal zone in the steel plate welded joint.

Note that, the width W of the insert member is based on the center point of the weld metal zones of the insert welded joints. The width W of the insert member in the case such as shown in FIG. 3 is the maximum width in the direction perpendicular to the steel plate welded joint. Further, the width "d" of the weld metal zone is made a broader width when weld metal zones are formed at both surfaces of the steel.

The inventors ran repeated fracture tests on welded structures while changing the shape, dimensions, etc. of the insert member in various ways. As a result, they obtained the above relationships effective for preventing a brittle crack from propagating through the steel plate welded joint or steel plate base metal over a long distance.

The formula (1) shows that there is a correlative relationship in the effect of diverting a crack between the width W of the insert member 5 and the width "d" of the weld metal zone in the steel plate welded joint. A crack which has progressed through the steel plate welded joint 2 is changed in direction of progression by the insert member 5 and progresses along the slanted outer edge 51 or 52. At this time, if the width dimension of the insert member 5 is not sufficiently large compared with 3.2 times the width "d" of the weld metal zone, a crack which reaches the back end 51a or 52a of the arrest member may propagate through either the left or right of the outer edge 53 at the auxiliary countering side, again return to the steel plate welded joint 2, proceed as is, and fail to stop.

The drive force for making a crack which reaches the back ends 51a and 52a of the outer edges 51 and 52 progress toward the steel plate 1 substantially parallel to the weld metal zone of the steel plate welded joint may be considered to depend on the stress which is applied to the insert member 5 at the time of a test, but this is because this stress is proportional to the distance from the intersection of the weld line L which passes through the center of the welded joint 2 and the outer edge 53 at the auxiliary countering side. Due to the above correlative relationship, the above formula (2) was set to define the lower limit value of the width dimension W of the insert member. The upper limit value of W is not set, but is naturally defined to a range within the dimensions of the welded joint 2 at the time of working the invention. Note that, the height H of the insert member is not defined, but its range is defined by the lower limit of W and the limitations on the slant angle of the arrest member.

The formula (2) shows there a correlative relationship for the effect of diverting a crack between the plate thickness "t" of the insert member 5 and the plate thickness T of the steel plate 1.

The energy of the advancing crack is proportional to the plate thickness T of the steel plate, but when the plate thickness "t" of the insert member 5 is smaller than 0.95 time the plate thickness of the steel plate 1, the advancing crack is liable to not be diverted, but to enter the insert member 5. The possibility of the crack running through the insert member as it is becomes higher.

By setting the dimensional values of the insert member 5 in the above relationships, even if a crack occurs in the steel plate welded joint 2, it becomes possible to effectively divert the direction of propagation of the crack to the base metal side of the steel plate 1. If the relationships of the dimensional values of the insert member do not satisfy the relationships shown in the above formulas (1) and (2), depending on the state of the crack which occurs in the steel plate welded joint, this crack may enter the insert member, not be diverted to the base metal side of the steel plate, and end up propagating through the steel plate welded joint.

The height H of the insert member, for enabling a crack CR to be sufficiently separated from the welded joint 2, is preferably 250 mm or more, more preferably 300 mm or more, still more preferably 400 mm or more. The width W is also preferably 200 mm or more, more preferably 250 mm or more, still more preferably 300 mm or more.

Still further, in the welded structure A of the reference structure 1, the relationship between the brittle-to-ductile fracture transition temperature vTrs3 (°C) which expresses the toughness of the weld metal zone which forms the insert welded joint 6 and the brittle-to-ductile fracture transition temperature vTrs1 (°C) which expresses the toughness of the base metal of the steel plate 1 has to satisfy the relationship expressed by the following formula (3):

$$vTrs3 \leq vTrs1-20... \quad (3)$$

By making the relationship between the toughness of the weld metal zone forming the insert welded joint 6 and the toughness of the base metal of the steel plate 1 satisfy the formula (3), even if a crack occurs in the steel plate welded joint 2, it becomes possible to guide the direction of propagation of the crack from the steel plate welded joint to an insert welded joint 6 and effectively divert it to the base metal side of the steel plate 1.

If the relationship of the toughness of the weld metal zones forming the insert welded joints and the toughness of the base metal of the steel plate does not satisfy the above formula (3), depending on the state of the crack which occurs in the steel plate welded joint, this crack may enter the insert welded joint and further enter the insert member. It is liable to not be diverted to the base metal side of the steel plate and end up propagating through the steel plate welded joint.

The material of the insert member 5 is not particularly limited. Any steel plate which has conventionally known chemical compositions or steel properties may be used without limitation. The welded structure is configured to keep a brittle crack from entering the insert member, so the insert member 5 is not particularly limited in material or properties, but its strength and toughness are preferably made at least the extents of the base metal of the steel plate welded joint 2.

Note that, in the reference structure 1, the explanation was given of a configuration welding only a single insert member 5 to the steel plates 1, but the invention is not limited to this. For example, it is also possible to use two or more insert members stacked together. These may be suitably employed.

Control of Propagation Route of Brittle Crack

The control of the crack propagation route in the case where a brittle crack occurs in the steel plate welded joint 2 in the welded structure 1A configured in the above way will be explained below.

As shown in FIG. 2, a brittle crack CR which occurs at one side of the steel plate welded joint 2 in the longitudinal direction (top in vertical length direction in FIG. 2) starts being propagated toward the other side of the steel plate welded joint 2 in the longitudinal direction (bottom in vertical length direction in FIG. 2) (see two-dot chain line arrow in FIG. 2), then reaches an insert welded joint 6.

The insert welded joints 6 extend in the direction of propagation of the crack continuously from the steel plate welded joint, so if the slant angle of the insert welded joints 6 are suitable, the crack, as illustrated, will be guided to the insert weld joint 6 which is formed at the slanted outer edge 51 (or outer edge 52) of the insert member 5 and will propagate along the boundary of the insert welded joint 6 and the steel plate 1. Further, the crack is diverted from the end of the insert welded joint 6 in the horizontal width direction to the base metal side of the steel plate 1 and is arrested in the region 1A which is positioned facing that horizontal width direction end and which has a brittle crack arrest property Kca of 4000N/mm$^{1.5}$ or more.

In this case, if the brittle-to-ductile fracture transition temperature vTrs3 (°C) of the insert welded joint 6 satisfies the above formula (3) with respect to the brittle-to-ductile fracture transition temperature vTrs1 (°C) of the steel plate 1, the chance of the brittle crack CR entering the insert welded joint 6 becomes smaller and propagation of the brittle crack can be more reliably diverted to the base metal side.

If the transition temperature vTrs3 of the weld metal is higher than the transition temperature vTrs1 of the base metal steel plate, a brittle crack CR which is propagated through the steel plate welded joint 2 in the longitudinal direction may enter the insert welded joint 6 and then may enter the insert member 5 in another conceivable case, so this is not preferred.

To ensure that the crack control part 4 exhibit the above function, a steel plate welded joint where there is a possibility of a crack occurring when the welded structure is exposed to fracture energy is assumed. One of more locations of the welded joint may be provided with a crack control part facing the main countering side in the direction from which the crack arrives. In a steel plate welded joint where a crack is projected as progressing from both directions, it is possible to provide a distance between the crack control parts of the two locations while changing the orientation of the insert member.

At this time, it is necessary to establish a sufficient distance for arresting a crack diverted along the crack control part at the base metal part, but for example it is sufficient to separate it by exactly the height H of the insert material.

Method of Preparation of Crack Control Part

Below, one example of the method for preparation of a crack control part 4 in the above-mentioned welded structure A will be explained.

The welded structure A of the reference structure 1 is an example of provision of a crack control part 4 to a welded structure formed by butt welding steel plates with at least partial regions with a brittle crack arrest property Kca of 4000N/mm$^{1.5}$ or more.

The crack control part is provided at least at one location in the middle of the steel plate welded joint where crack initiation and propagation are anticipated when exposed to a large fracture energy such as a collision or earthquakes. At this time, the crack control part 4 has to be provided so that a horizontal width direction end of an insert welded joint which is continuously formed from the steel plate welded joint adjoins at least a region with a Kca of the steel plate of 4000N/mm$^{1.5}$ or more.

To provide a crack control part 4, first, a through hole 3 for placement of the insert member 5 is formed. The through hole may be formed at the stage of the steel plates by a method of cutting the portions for forming the through hole in advance, a method of cutting the steel plates in a state temporarily assembled for welding, a method of forming a through hole after welding the steel plates, etc. Any of these methods is acceptable. It is also possible to form the through hole 3.in an existing welded structure.

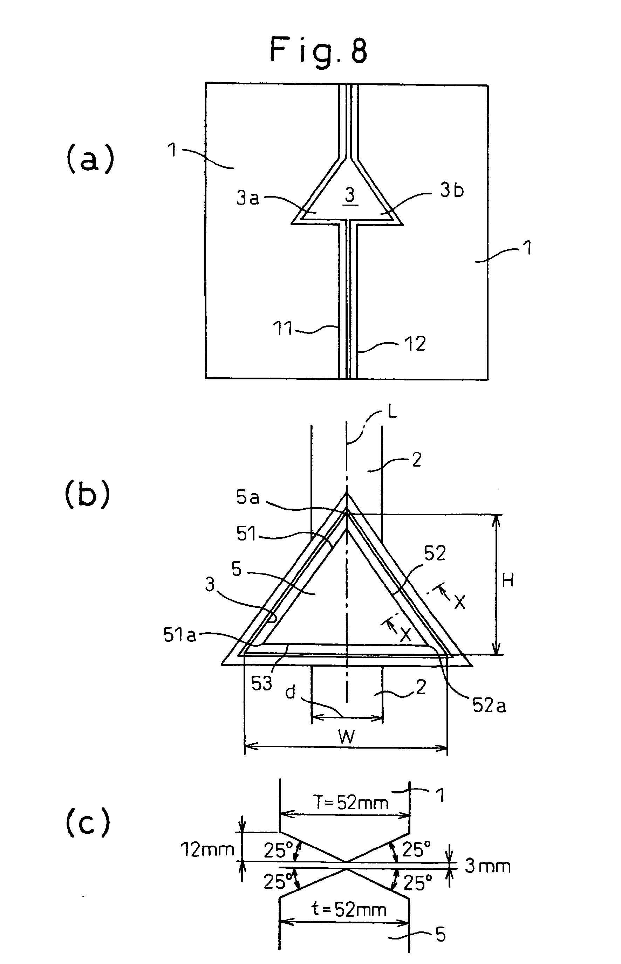

When forming the through hole 3 before welding the steel plate, first as shown in FIG. 8(a), the steel plates 1 are cut to form the through hole 3 (3a, 3b) so as to expose the weld ends 11 and 12 of the steel plates 1. Next, leaving the parts forming the through holes 3a and 3b, the weld ends 11 and 12 of the steel plates 1 are butt welded so as to form the steel plate welded joint 2.

Next, the insert member 5 is inserted into the formed through hole 3. Next, the slanted outer edges 51 and 52 and the auxiliary countering side outer edge 53 are butt welded to the exposed weld ends of the respectively facing steel plates to thereby form the insert welded joints 6. By such a procedure, a crack control part comprising an insert member 5 and insert welded joints 6 is formed so as to become symmetric at the steel plates 1 about the weld line L of the steel plate welded joint 2.

In the reference structure 1, in the step of forming the crack control part, the insert member 5 is formed to pass through the steel plates 1 so that its outer edges 51 and 52 which extend from the weld line L of the steel plate welded joint 2 are slanted with respect to the longitudinal direction of the steel plate welded joint 2 by an angle of 15° to 50° in range. Further, the insert member 5 is shaped, as shown in FIG. 2 etc., as a substantially triangular shape when seen overall in a plan view. It is arranged so that the vertex 5a of the insert member 5 is positioned on the weld line L of the steel plate welded joint 2, is formed so that the slanted outer edges 51 and 52 which extend from the vertex 5a of the insert member 5 are slanted with respect to the longitudinal direction of the steel plate welded joint 2 by an angle of 15° to 50° in range, and is further formed so that the outer edge 53 at the auxiliary countering side which connects the back ends 51a and 52a of the slanted outer edges 51 and 52 intersects the weld line L by an angle of 70° to 110° in range.

In the reference structure 1, the welding method and the welding material when butt welding the steel plates 1 together and the steel plates 1 and the insert member 5 are not particularly limited. However, to raise the toughness against fracture of the insert welded joints 6 themselves, for example, as the welding method, it is preferable to employ shielded metal arc welding (SMAW) or carbon dioxide gas arc welding ($CO_2$ welding) and, further, to make the compositions of the wire forming the welding material high in Ni.

Further, to suppress brittle crack propagation as much as possible and, furthermore, to prevent starting points for new fatigue cracks or brittle cracks from being formed at the steel plate welded joint 2 and insert welded joints 6, it is preferable to completely fill the welded joints with weld metal so as to ensure there are no weld defects.

Using the above procedure, it is possible to produce the welded structure A having excellent brittle crack propagation resistance of the reference structure 1, such as shown in FIG. 2.

Example of Ship Structure Applying Welded Structure

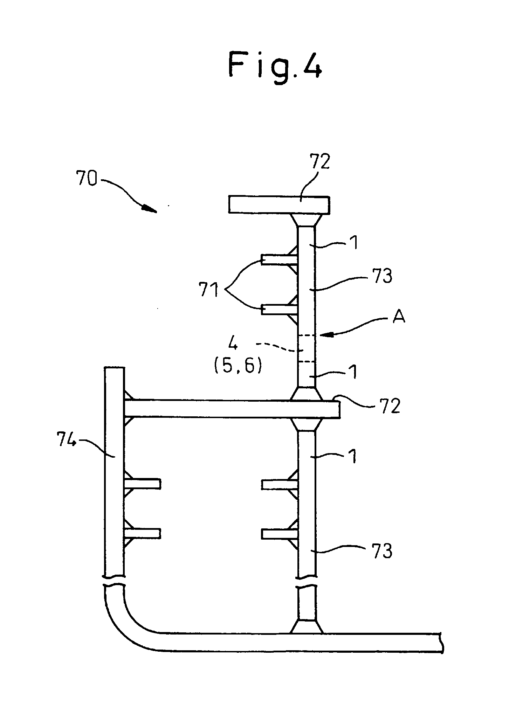

An example of a ship structure applying the above-mentioned welded structure A will be shown in the schematic view of FIG. 4.

As shown in FIG. 4, a ship structure 70 is generally configured provided with girders (reinforcing materials) 71, deck plates (horizontal members) 72, hull inner plates (vertical members) 73, and hull outer plates 74. Further, the illustrated ship structure 70 is structured provided with the welded structure of the reference structure 1, by providing a crack control part 4 at part of the longitudinal direction of a steel plate welded joint (not shown in figure) which is formed by butt welding a plurality of steel plates 1 forming the hull inner plates 73.

According to the ship structure 70 of the above constitution, by applying the constitution of the welded structure A of the reference structure 1, even if a brittle crack which propagates along the steel plate welded joint occurs, the crack control part 4 enables the propagation direction of the crack to be effectively controlled. Due to this, it is possible to stably arrest a brittle crack occurring in a steel plate welded joint and possible to prevent large scale fracture in a hull inner plate 73 and in turn the ship structure 70.

Second Reference Structure (Outside the scope of the invention)

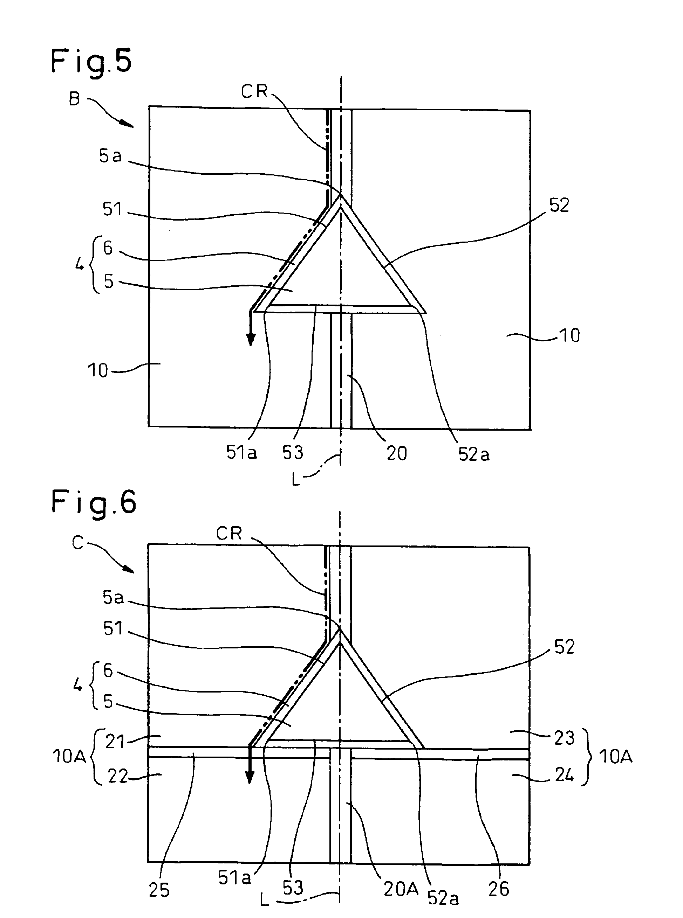

Below, a second embodiment of the present invention, that is, a welded structure B, will be explained while mainly referring to FIG. 5. Note that, in the following explanation, parts of the constitution common with the welded structure of the reference structure 1 explained above are assigned the same reference notations and detailed explanations are omitted. Further, the same is true for the explanations of the first and second embodiments of the invention.

The welded structure B of the reference structure 2, while a detailed illustration is omitted in FIG. 5, has a base metal as a whole of the steel plates 10 with a brittle crack arrest property Kca of 4000N/mm$^{1.5}$ or more. On this point, it differs from the welded structure A of the first embodiment.

According to the welded structure B, if a brittle crack occurs in the steel plate welded joint 20, the crack which has propagated along the steel plate welded joint 20 can be made to propagate along the boundary between an insert welded joint 6 and the steel plate base metal (or heat affected zone of adjoining base metal) and be diverted to the base metal side of the steel plate 10 (see two-dot chain arrow in FIG. 5).

Further, in the same way as the welded structure A, a crack which is diverted to the base metal side of the steel plate 10 immediately stops at the steel plate 10, so the steel plate welded joint 20 will not fracture and, further, it becomes possible to prevent large-scale fracture from occurring in the welded structure B. Further, the welded structure B of the reference structure 2 more preferably has a base metal as a whole forming the steel plate 10 which has a brittle crack arrest property Kca of 6000N/mm$^{1.5}$ or more.

First Embodiment of the Invention

Below, a third embodiment of the present invention, that is, a welded structure C, will be explained in detail while referring mainly to FIG. 6.

The welded structure C is an example of the case where the steel plates to be butt welded are formed by butt welding pluralities of small steel plates. That is, as shown in FIG. 6, the steel plates 10A are formed by butt welding two or more small steel plates arranged in the longitudinal direction of the steel plate welded joint 20A (see reference numerals 21 to 24 in FIG. 6). The steel plate welded joint 10 formed by butt welding these steel plates 10A and 10A is provided with a crack control part 4.

Between the small steel plates 21 to 24, small steel plate welded joints 25 and 26 are formed. The insert welded joint 6 which is formed at the outer edge 53 side at the auxiliary countering side of the insert member 5 is provided in contact with the small steel plate welded joints 25 and 26. For this reason, in the welded structure C, the outer edge 53 of the auxiliary countering side of the insert member 5 (outer edge of insert member at horizontal width direction end side) is made the same shape as the shapes of the small steel plate welded joints 25 and 26.

In this way, the welded structure C differs from the welded structures A and B of the above-mentioned reference structures 1 and 2.

Further, in the example shown in FIG. 6, for convenience in illustration, as the small steel plates, four small steel plates 21 to 24 are shown. The case is shown where the small steel plate 21 and the small steel plate 22 are joined by the small steel plate welded joint 25 and where the small steel plate 23 and the small steel plate 24 are joined by the small steel plate welded joint 26.

Further, the welded structure C of the present embodiment is given a brittle crack arrest property Kca of the base metal forming the small steel plate 22 and small steel plate 24 of 4000N/mm$^{1.5}$ or more, but the brittle crack arrest property Kca of the small steel plate 21 and small steel plate 23 is not particularly limited.

According to the welded structure C, in the same way as the above-mentioned welded structures A and B, even if a brittle crack occurs in the steel plate welded joint 20A, this brittle crack can be diverted by the slanted outer edge 51 (52) of the insert member 5 or by an insert welded joint 6 to the base metal side of the steel plate 10A (see two-dot chain arrow in FIG. 6). In the example shown in FIG. 6, a brittle crack CR which occurs in the steel plate welded joint 20A runs from the insert welded joint 6 at the horizontal width direction end to reach the small steel plate welded joint 25, then enters the small steel plate 22 positioned facing that horizontal width direction end and having a brittle crack arrest property Kca of 4000N/mm$^{1.5}$ or more and is arrested inside of that steel plate.

In this way, a crack which is diverted to the base metal side of the steel plate 10A immediately stops at the small steel plate 22 with the high brittle crack arrest property Kca, so the steel plate welded joint 20A will not fracture and, further, it becomes possible to prevent a large-scale fracture from occurring in the welded structure C.

Further, the welded structure C of the present embodiment more preferably has a base metal of the small steel plates 22 and 24 forming the steel plate 10A which has a brittle crack arrest property Kca of 6000N/mm$^{1.5}$ or more.

Second Embodiment of the Invention

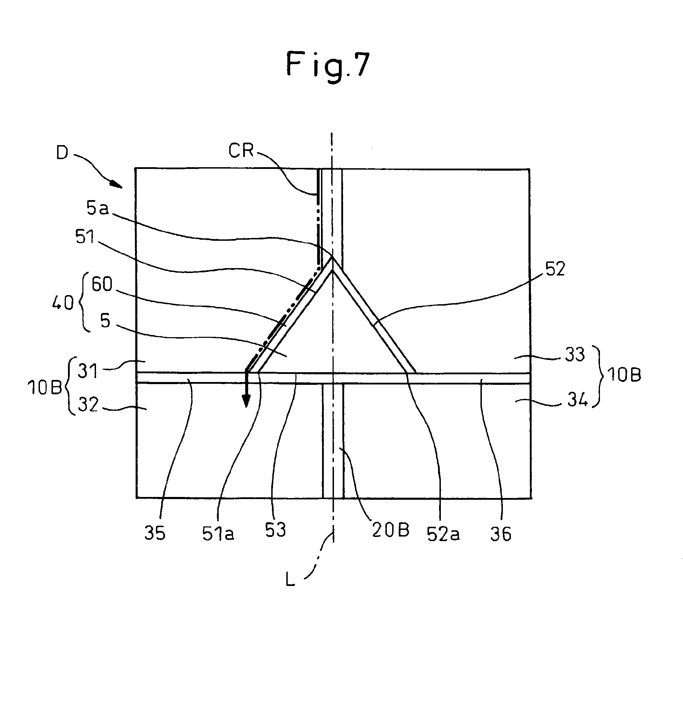

Below, a fourth embodiment of the present invention, that is, a welded structure D, will be explained in detail while referring mainly to FIG. 7. The welded structure D, as shown in FIG. 7, is formed by butt welding steel plates 10B each comprising at least two.small steel plates arranged in the longitudinal direction of the steel plate welded joint 20B (see reference numerals 31 to 34 in FIG. 7). The steel plate welded joint 20B which is formed by butt welding the steel plates 10B and 10B is provided with a crack control part 4. On this point, the configuration is partially the same as the welded structure C of the third embodiment.

On the other hand, the welded structure D of the present embodiment, as illustrated, is configured including an insert welded joint where small steel plate welded joints 35 and 36 which are formed by butt welding small steel plates are formed at the outer edge 53 side at the auxiliary countering side of the insert member 5 (outer edge of insert member at horizontal width direction end). On this point, it differs from the welded structure C of the third embodiment.

Still further, the welded structure D has a relationship between the brittle-to-ductile fracture transition temperature vTrs4 (°C) which expresses the toughness of the weld metal zone forming the small steel plate welded joints 35 and 36 and the brittle-to-ductile fracture transition temperature vTrs1 (°C) which expresses the base metal toughness of the steel plate 10B made a relationship which satisfies the following formula (4)

$$vTrs4 \leq vTrs1-20... \quad (4)$$

On that point as well, this is made a constitution different from the welded structure C of the third embodiment.

Further, the welded structure D has a brittle crack arrest property Kca of the base metal of all of the small steel plates 31 to 34 forming the steel plate 10B of 4000N/mm$^{1.5}$ or more. Further, the welded structure D of the illustrated example has small steel plate welded joints 35 and 36 connected formed into a straight line.

According to the welded structure D, in the same way as the above-mentioned welded structures A to C, even if a brittle crack occurs in the steel plate welded joint 20B, the slanted outer edge 51 (52) of the insert member 5 or the insert joint 60 which is formed along the slanted outer edge 51 (52) can be used to divert the brittle crack CR to the base metal side of the steel plate 10B (see two-dot chain line arrow in FIG. 7).

In the example shown in FIG. 7, a brittle crack CR which occurs at the steel plate welded joint 20A runs from the insert welded joint 60 of the horizontal width direction end to reach the small steel plate welded joint 35, then enters the small steel plate 32 which is positioned facing the horizontal width direction end and has a brittle crack arrest property Kca of 4000N/mm$^{1.5}$ or more and is arrested inside that steel plate.

In this way, a crack which is diverted to the base metal side of the steel plate 10B is immediately arrested at the small steel plate 32 with the high brittle crack arrest property Kca, so the steel plate welded joint 20B does not fracture and, further, it becomes possible to prevent large-scale fracture in the welded structure D. Further, the base metal of all of the small steel plates 31 to 34 forming the steel plate 10B of the welded structure D of the present embodiment is more preferably given a brittle crack arrest property Kca of 6000N/mm$^{1.5}$ or more.

Examples

Below, examples of the welded structure having excellent brittle crack propagation resistance according to the present invention will be given and the present invention will be explained in more detail, but the present invention is of course not limited to the following examples and can be worked while suitably given changes within a range compatible with the surrounding context. These are all included in the technical scope of the present invention.

Production of Welded Structure

First, in the production process, molten steel was deoxidized and desulfurized and was adjusted in chemical compositions and then was continuously cast to produce cast ingots of the chemical compositions shown in the following Table 1. Further, under production conditions based on the standards of rolled steel KA32, KA36, and KA40 for ship hulls of ClassNK, the cast ingots were reheated and used to roll thick gauge plate to thereby produce steel plates having plate thicknesses of 25 mm to 150 mm in range. Furthermore, these steel plates were subjected to various types of heat treatment. By controlling the conditions at this time, the brittle crack arrest properties Kca $(N/mm^{1.5})$ of the base metals were suitably adjusted to various values. From the produced steel plates, test pieces were suitably taken. These were evaluated and checked for the Kca characteristic at -10°C and were measured for the brittle-to-ductile fracture transition temperature vTrs1 (°C) of the steel plates. Table 1 shows the Kca characteristic and vTrs1 together.

Next, as shown in FIG. 8(a), through holes 3a and 3b were formed so as to open at the weld ends 11 and 12 of the steel plates 1. Further, the weld ends 11 and 12 of the steel plates 1 were butt welded so that the through holes 3a and 3b formed through holes 3 symmetric about the weld line L so as to thereby form steel plate welded joints 2 and thereby join the steel plates 1 together.

Next, each steel plate shown in the following Table 1 was used to prepare an insert member 5 of the shape shown in Table 2. This was inserted into a through hole 3 formed in the steel plates 1 as shown in FIG. 8(b). Further, the slanted outer edges 51 and 52 of the insert member 5 and the outer edge 53 of the auxiliary countering side were butt welded to the facing weld ends of the steel plates exposed at the through hole 3 so as to join the insert member 5 and the steel plates 1. Due to the above procedure, a crack control part 5 comprising an insert member 5 and an insert welded joint 6 was formed so as to become symmetric at the steel plates 1 about the weld line L of the steel plate welded joint 2.

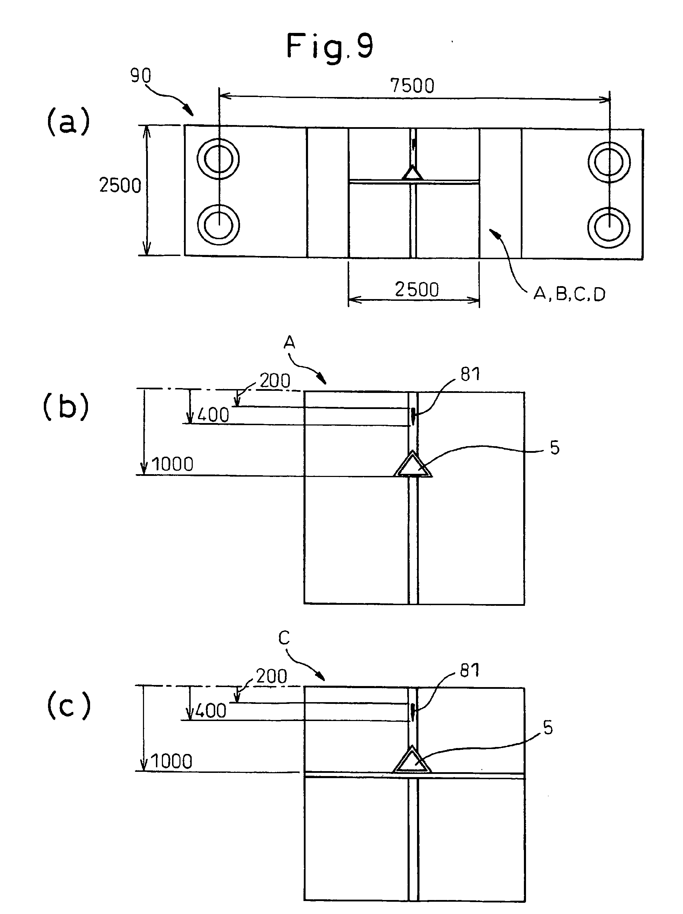

Further, the insert member 5, as shown in FIGS. 9(b) and (c), was arranged at a location where the position of the outer edge 53 at the auxiliary countering side became 1000 mm from the top end of the steel plate 1. Further, as shown in FIG. 8(c), the slanted outer edges 51 and 52 of the insert member 5 and the outer edge 53 at the auxiliary countering end and also the weld ends exposed at the inside of the through hole 3 of the steel plate 1 were beveled so as to become slanted by 130° about the center of the plate thickness direction as the vertex (25° with respect to horizontal line). Further, the edges of the insert member 5 and the weld ends of the steel plate 1 exposed inside the through hole 3 were welded in a state giving a root gap of about 3 mm at the vertex.

Note that the butt welding of the steel plates 1 and the butt welding of the steel plates 1 and insert member 5 in the above procedure were performed by carbon dioxide gas arc welding ($CO_2$ welding). As the weld material at that time, weld wire given a high Ni ingredient was used. Further, at the locations of formation of the welded joints, to prevent the formation of starting points of new cracks, the welded joints were welded so as to completely fill them with weld metal. After this, the welded joints were cooled to thereby produce the welded structures (comparative examples) as shown in FIG. 2.
Further, in the same way as above, steel plates and insert members were joined to produce welded structures such as shown in FIG. 5 to FIG. 7 (invention examples and comparative examples).

Evaluation Test

The welded structures produced by the above procedure were subjected to the following evaluation test.
First, the test apparatus 90 such as shown in FIG. 9(a) was prepared. Samples of the welded structures fabricated by the above procedures were suitably prepared and attached to the test apparatus 90. Here, the window frame 81 for forming the crack at the steel plate welded joint 2 shown in FIGS. 9(b) and (c) is used for forcibly forming a brittle crack by placement of a wedge and application of a predetermined stress. A notched front end is formed with a slit of a width of 0.2 mm.
Next, a tensile stress of $262N/mm^2$ or $300N/mm^2$ is given in a direction perpendicular to the weld line L of the steel plate welded joint 2, whereby a brittle crack is formed in the steel plate welded joint 2. Further, this brittle crack is made to propagate on the weld line L of the steel plate welded joint 2 so as to evaluate the resistance to brittle crack propagation of the welded structure. The ambient temperature at this time was made -10°C.

Further, the brittle crack which was propagated through the steel plate welded joint 2 reached the insert welded joint 6 forming the crack control part 4. After this, the direction along which the brittle crack propagated and the arrest location were confirmed. The states of propagation and arrest of the cracks were evaluated by the two stages (b and c) shown below corresponding to FIGS. 1(b) and 1(c). The results are shown in the following Table 2.

[b]... the brittle crack reaches the insert welded joint, then is propagated along the boundary of the steel plate base metal and an insert welded joint, then is diverted to the base metal side of the steel plate and is immediately arrested at the steel plate (state of FIG. 1(b)).

[c]... the brittle crack reaches an insert welded joint, then enters this insert welded joint, passes through the insert member, and is propagated through the steel plate welded joint as it is (state of FIG. 1(c)).

Further, regarding the case of [b], the resistance to crack propagation was evaluated by a score (highest value 10) which was calculated based on the distance of propagation of the cracks.

The chemical compositions of each of the steel plates used in the embodiments and the brittle crack arrest property Kca (N/mm$^{1.5}$) and brittle-to-ductile fracture transition temperature vTrs1 (°C) of each of the base metals are shown in Table 1, while the properties and shape of the steel plate of each of the insert members 5, the welding conditions when forming each insert welded joint 6, the welding conditions when butt welding steel plates 1 to form each steel plate welded joint 2, and the results of evaluation of the propagation of brittle cracks are shown in Table 2.

Table 1

| | Steel plate no. | Chemical compositions (mass%; however, B, Ca, Mg, and REM in ppm) | | | | | | | | | | | | | | | | | | Plate thickness T (mm) | Brittle crack arrest property | | Brittle-to-ductile fracture transition temperature vTrs1 (°C) |
| | | C | Si | Mn | P | S | Al | B | Cu | Ni | Cr | Mo | Nb | V | Ti | Zr | Ca | Mg | REM | | Kca (N/mm$^{1.5}$) | Evaluation temp. (°C) | |
|---|---|---|---|---|---|---|---|---|---|---|---|---|---|---|---|---|---|---|---|---|---|---|---|
| Steel plate 1 | P1 | 0.140 | 0.23 | 1.26 | 0.005 | 0.004 | 0.023 | | | | | | 0.01 | | | | | | 20 | 25 | 4200 | -10 | -75 |
| | P2 | 0.110 | 0.23 | 1.45 | 0.005 | 0.004 | 0.023 | | 0.10 | 0.10 | | | 0.02 | | 0.01 | | | | | 50 | 5100 | -10 | -80 |
| | P3 | 0.120 | 0.20 | 1.42 | 0.004 | 0.002 | 0.027 | 10 | | | | | 0.02 | | 0.012 | | | | | 50 | 3900 | -10 | -60 |
| | P4 | 0.120 | 0.20 | 1.52 | 0.004 | 0.002 | 0.027 | 10 | | 0.12 | | | 0.02 | | 0.012 | | | | 8 | 50 | 4200 | -10 | -75 |
| | P5 | 0.070 | 0.23 | 1.18 | 0.007 | 0.003 | 0.013 | 10 | 0.40 | 1.15 | | | 0.01 | | 0.01 | | | | | 60 | 7000 | -10 | -100 |
| | P6 | 0.120 | 0.20 | 1.42 | 0.004 | 0.002 | 0.027 | 10 | 0.10 | 0.10 | | | 0.02 | | 0.012 | | | | | 60 | 2300 | -10 | -50 |
| | P7 | 0.085 | 0.06 | 1.58 | 0.005 | 0.002 | 0.025 | 9 | 0.28 | 0.29 | | | 0.01 | | 0.01 | | 9 | 18 | | 60 | 6300 | -10 | -90 |
| | P8 | 0.090 | 0.05 | 1.62 | 0.008 | 0.003 | 0.031 | 10 | 0.30 | 0.30 | | | 0.012 | 0.039 | 0.01 | | | | | 60 | 6300 | -10 | -90 |
| | P9 | 0.091 | 0.05 | 1.57 | 0.004 | 0.002 | 0.027 | 10 | 0.35 | 0.71 | | | 0.01 | | 0.012 | | 8 | 18 | | 70 | 6300 | -10 | -90 |
| | P10 | 0.120 | 0.20 | 1.42 | 0.004 | 0.002 | 0.027 | 10 | 0.10 | 0.10 | | | 0.02 | | 0.012 | | | | | 70 | 2300 | -10 | -50 |
| | P11 | 0.085 | 0.06 | 1.58 | 0.005 | 0.002 | 0.025 | 9 | 0.28 | 0.29 | | | 0.01 | 0.020 | 0.01 | | 9 | 18 | | 70 | 6200 | -10 | -70 |
| | P12 | 0.095 | 0.15 | 1.41 | 0.005 | 0.002 | 0.025 | 9 | 0.20 | 0.18 | | 0.01 | 0.01 | | 0.01 | | | | | 70 | 4200 | -10 | -75 |
| | P13 | 0.070 | 0.23 | 1.25 | 0.007 | 0.003 | 0.013 | 10 | 0.85 | 1.85 | 0.20 | | 0.01 | 0.050 | 0.01 | | 12 | 25 | | 100 | 7000 | -10 | -100 |
| | P14 | 0.030 | 0.23 | 0.90 | 0.005 | 0.004 | 0.023 | | 0.80 | 3.50 | | | | | 0.01 | | | | | 70 | 7000 | -10 | -100 |
| | P15 | 0.075 | 0.21 | 1.66 | 0.007 | 0.002 | 0.024 | 10 | 0.25 | 1.61 | 0.20 | | 0.01 | 0.050 | 0.01 | | 8 | 22 | | 150 | 6200 | -10 | -75 |
| Steel plate 2 | A1 | 0.060 | 0.23 | 1.45 | 0.005 | 0.004 | 0.023 | | 1.20 | 1.20 | | | 0.01 | | 0.01 | | | | | 25 | 11000 | -10 | -130 |
| | A2 | 0.040 | 0.23 | 1.10 | 0.005 | 0.004 | 0.023 | | 2.50 | 2.50 | | | | | 0.01 | | | | | 50 | 12000 | -10 | -145 |
| | A3 | 0.060 | 0.23 | 1.10 | 0.005 | 0.004 | 0.023 | 5 | 0.60 | 1.20 | | | 0.01 | | 0.01 | | | | | 50 | 7000 | -10 | -100 |
| | A4 | 0.040 | 0.23 | 1.05 | 0.005 | 0.004 | 0.023 | | 1.50 | 2.50 | | | | | 0.01 | | | | | 60 | 7000 | -10 | -100 |
| | A5 | 0.030 | 0.23 | 0.90 | 0.005 | 0.004 | 0.023 | | 0.80 | 3.50 | | | | | 0.01 | | | | | 70 | 7000 | -10 | -100 |

Table 2

| Sample no. | Structure of welded structure (FIG. 2,5,6,7) | Steel plate no. (from Table 1) | Steel plate welded joint | | | | | | | | | Insert material | | | | | | | | |
|---|---|---|---|---|---|---|---|---|---|---|---|---|---|---|---|---|---|---|---|---|
| | | | Plate thickness T (mm) | Weld input heat (kJ/cm) | Weld metal zone width d (mm) | Location (see symbols in FIGS. 2, 5, 6, 7) | Brittle crack arrest property Kca of base metal part (N/mm$^{1.5}$) | vTrs of base metal part (°C) | Location (see symbols in FIGS. 2, 5, 6, 7) | Brittle crack arrest property Kca of base metal part (N/mm$^{1.5}$) | vTrs of base metal part (lower region) vTrs1 (°C) | Main counter-ing side angle θ1 (°) | Auxiliary counter-ing side angle θ2 (°) | Dimensions (mm) | | | Sign judgment formula W-3.2 d-50 | Steel plate properties of insert material | | |
| | | | | | | | | | | | | | | Width W | Height H | Plate thickness t | | Steel plate no. (from Table 1) | Brittle crack arrest property Kca (N/mm$^{1.5}$) | Brittle-to-ductile fracture transition temperature vTrs2 (°C) |
| 1 | FIG. 5 | P1 | 25 | 185 | 23 | 10 | 4200 | -75 | - | - | - | 34 | 90 | 600 | 450 | 25 | 476 | A1 | 11000 | -130 |
| 2 | FIG. 5 | P1 | 25 | 180 | 23 | 10 | 4200 | -75 | - | - | - | 34 | 90 | 600 | 450 | 25 | 476 | A1 | 11000 | -130 |
| 3 | FIG. 5 | P2 | 50 | 320 | 28 | 10 | 5100 | -80 | - | - | - | 32 | 90 | 250 | 200 | 50 | 110 | A2 | 12000 | -145 |
| 4 | FIG. 5 | P2 | 50 | 320 | 28 | 10 | 5100 | -80 | - | - | - | 32 | 90 | 250 | 200 | 50 | 110 | A2 | 12000 | -145 |
| 5 | FIG. 5 | P2 | 50 | 320 | 28 | 10 | 5100 | -80 | - | - | - | 32 | 90 | 250 | 200 | 50 | 110 | A2 | 12000 | -145 |
| 6 | FIG. 5 | P9 | 70 | 460 | 34 | 10 | 6300 | -90 | - | - | - | 45 | 90 | 280 | 140 | 68 | 121 | P10 | 2300 | -50 |
| 7 | FIG. 5 | P13 | 100 | 550 | 42 | 10 | 7000 | -100 | - | - | - | 45 | 90 | 500 | 250 | 100 | 316 | P13 | 7000 | -100 |
| 8 | FIG. 5 | P13 | 100 | 550 (Note 3) | 38 | 10 | 7000 | -100 | - | - | - | 45 | 90 | 500 | 250 | 100 | 328 | P13 | 7000 | -100 |
| 9 | FIG. 5 | P15 | 150 | 430 (Note 4) | 35 | 10 | 6200 | -75 | - | - | - | 34 | 90 | 600 | 450 | 150 | 438 | P15 | 6200 | -75 |
| 10 | FIG. 5 | P15 | 150 | 430 (Note 4) | 35 | 10 | 6200 | -75 | - | - | - | 34 | 90 | 600 | 450 | 150 | 438 | P15 | 6200 | -75 |
| 11 | FIG. 5 | P9 | 70 | 450 | 34 | 10 | 6300 | -90 | - | - | - | 34 | 90 | 600 | 450 | 70 | 441.2 | P9 | 6300 | -90 |
| 12 | FIG. 5 | P4 | 50 | 450 | 34 | 10 | 4200 | -75 | - | - | - | 15 | 90 | 240 | 450 | 50 | 81.2 | A3 | 7000 | -100 |
| 13 | FIG. 5 | P4 | 50 | 450 | 34 | 10 | 4200 | -75 | - | - | - | 50 | 90 | 1055 | 450 | 50 | 896.2 | A3 | 7000 | -100 |
| 14 | FIG. 5 | P4 | 50 | 450 | 34 | 10 | 4200 | -75 | - | - | - | 25 | 90 | 420 | 450 | 50 | 261.2 | A3 | 7000 | -100 |
| 15 | FIG. 5 | P4 | 50 | 450 | 34 | 10 | 4200 | -75 | - | - | - | 40 | 90 | 750 | 450 | 50 | 591.2 | A3 | 7000 | -100 |
| 16 | FIG. 5 | P4 | 50 | 460 | 35 | 10 | 4200 | -75 | - | - | - | 35 | 70 | 675 | 450 | 50 | 513 | A3 | 7000 | -100 |
| 17 | FIG. 5 | P4 | 50 | 460 | 35 | 10 | 4200 | -75 | - | - | - | 35 | 110 | 820 | 450 | 50 | 658 | A3 | 7000 | -100 |
| 18 | FIG. 5 | P4 | 50 | 330 | 32 | 10 | 4200 | -75 | - | - | - | 45 | 90 | 200 | 100 | 50 | 47.6 | A3 | 7000 | -100 |
| 19 | FIG. 5 | P4 | 50 | 330 | 32 | 10 | 4200 | -75 | - | - | - | 34 | 90 | 200 | 150 | 50 | 47.6 | A3 | 7000 | -100 |
| 20 | FIG. 5 | P4 | 50 | 330 | 32 | 10 | 4200 | -75 | - | - | - | 24 | 90 | 225 | 250 | 50 | 72.6 | A3 | 7000 | -100 |
| 21 | FIG. 5 | P4 | 50 | 330 | 32 | 10 | 4200 | -75 | - | - | - | 27 | 90 | 250 | 250 | 50 | 97.6 | A3 | 7000 | -100 |
| 22 | FIG. 5 | P4 | 50 | 330 | 32 | 10 | 4200 | -75 | - | - | - | 31 | 90 | 300 | 250 | 50 | 147.6 | A3 | 7000 | -100 |
| 23 | FIG. 5 | P4 | 50 | 330 | 32 | 10 | 4200 | -75 | - | - | - | 27 | 90 | 300 | 300 | 50 | 147.6 | A3 | 7000 | -100 |
| 24 | FIG. 5 | P4 | 50 | 330 | 32 | 10 | 4200 | -75 | - | - | - | 21 | 90 | 300 | 400 | 50 | 147.6 | A3 | 7000 | -100 |
| 25 | FIG. 5 | P5 | 60 | 550 | 42 | 10 | 7000 | -100 | - | - | - | 45 | 90 | 400 | 200 | 60 | 216 | P6 | 2300 | -50 |
| 26 | FIG. 5 | P7 | 60 | 550 | 42 | 10 | 6300 | -90 | - | - | - | 27 | 90 | 200 | 200 | 70 | 16 | P10 | 2300 | -50 |
| 27 | FIG. 5 | P8 | 60 | 550 | 42 | 10 | 6300 | -90 | - | - | - | 45 | 90 | 500 | 250 | 70 | 316 | P10 | 2300 | -50 |
| 28 | FIG. 5 | P1 | 25 | 240 | 23 | 10 | 4200 | -75 | - | - | - | 37 | 90 | 150 | 100 | 50 | 26 | P3 | 3900 | -60 |
| 29 | FIG. 5 | P9 | 70 | 460 | 34 | 10 | 6300 | -90 | - | - | - | 41 | 90 | 700 | 400 | 70 | 541 | P10 | 2300 | -50 |

*Reference Example

Table 3(Continuation of Table 2)

| Sample no. | Insert material welded joint | | | | Welding conditions and vTrs4 of weld metal zone forming small steel plate welded joint | | | | Result of evaluation of resistance to brittle crack propagation of welded structure | | | | |
|---|---|---|---|---|---|---|---|---|---|---|---|---|---|
| | Weld input heat (kJ/mm) | Joint width (mm) | Brittle-to-ductile fracture transition temperature vTrs3 (weld metal zone) (° C) | Sign judgment formula [2] vTrs1-20 -vTrs3 | Weld input heat (kJ/cm) | Width of weld metal zone (mm) | Brittle-to-ductile fracture transition temperature vTrs4 (weld metal zone) (° C) | Sign judgment formula [4] vTrs1-20 -vTrs4 | Test load stress (N/mm²) | Sign judgment formula [0] vTrs1 -vTrs3 | State of advance of brittle crack (see symbol in FIG. 2) | Crack arrest performance | Evaluation of score based on crack arrest distance |
| 1 | 2.6 | 22 | -135 | 40 | - | - | - | | 262 | 60 | [b] | Crack arrested | 7 |
| 2 | 2.6 | 22 | -135 | 40 | - | - | - | | 300 | 60 | [b] | Crack arrested | 5 |
| 3 | 2.5 | 32 | -135 | 35 | - | - | - | | 262 | 55 | [b] | Crack arrested | 6 |
| 4 | 2.5 | 32 | -135 | 35 | - | - | - | | 300 | 55 | [b] | Crack arrested | 8 |
| 5 | 4.2 | 32 | -80 | -20 | - | - | - | | 262 | 0 | [b] | Crack arrested | 4 |
| 6 | 1.6 | 30 | -110 | 0 | - | - | - | | 262 | 20 | [b] | Crack arrested | 6 |
| 7 | 1.8 | 26 | -100 | -20 | - | - | - | | 262 | 0 | [b] | Crack arrested | 5 |
| 8 | 2.8 | 64 | -135 | 15 | - | - | - | | 300 | 35 | [b] | Crack arrested | 7 |
| 9 | 2.5 | 76 | -135 | 40 | - | - | - | | 262 | 60 | [b] | Crack arrested | 5 |
| 10 | 2.5 | 76 | -135 | 40 | - | - | - | | 300 | 60 | [b] | Crack arrested | 3 |
| 11 | 2.5 | 42 | -135 | 25 | - | - | - | | 262 | 45 | [b] | Crack arrested (entered from bottom side) | 6 |
| 12 | 2.5 | 42 | -135 | 40 | - | - | - | | 262 | 60 | [b] | Crack arrested | 5 |
| 13 | 2.5 | 42 | -135 | 40 | - | - | - | | 262 | 60 | [b] | Crack arrested | 5 |
| 14 | 2.5 | 42 | -135 | 40 | - | - | - | | 300 | 60 | [b] | Crack arrested | 9 |
| 15 | 2.5 | 42 | -135 | 40 | - | - | - | | 300 | 60 | [b] | Crack arrested | 9 |
| 16 | 2.5 | 42 | -135 | 40 | - | - | - | | 262 | 60 | [b] | Crack arrested | 5 |
| 17 | 2.5 | 42 | -135 | 40 | - | - | - | | 262 | 60 | [b] | Crack arrested | 5 |
| 18 | 2.5 | 42 | -135 | 40 | - | - | - | | 262 | 60 | [b] | Crack arrested | 5 |
| 19 | 2.5 | 42 | -135 | 40 | - | - | - | | 262 | 60 | [b] | Crack arrested | 6 |
| 20 | 2.5 | 42 | -135 | 40 | - | - | - | | 262 | 60 | [b] | Crack arrested | 7 |
| 21 | 2.5 | 42 | -135 | 40 | - | - | - | | 262 | 60 | [b] | Crack arrested | 7 |
| 22 | 2.5 | 42 | -135 | 40 | - | - | - | | 262 | 60 | [b] | Crack arrested | 8 |
| 23 | 2.5 | 42 | -135 | 40 | - | - | - | | 262 | 60 | [b] | Crack arrested | 9 |
| 24 | 2.5 | 42 | -135 | 40 | - | - | - | | 262 | 60 | [b] | Crack arrested | 10 |
| 25 | 1.8 | 30 | -120 | 0 | - | - | - | | 262 | 20 | [b] | Crack arrested | 7 |
| 26 | 1.8 | 32 | -110 | 0 | - | - | - | | 262 | 20 | [b] | Crack arrested | 6 |
| 27 | 1.7 | 28 | -90 | -20 | - | - | - | | 262 | 0 | [b] | Crack arrested | 5 |
| 28 | 1.3 | 28 | -95 | 0 | - | - | - | | 262 | 20 | [b] | Crack arrested | 5 |
| 29 | 2.3 | 32 | -110 | 0 | - | - | - | | 262 | 20 | [b] | Crack arrested | 6 |

*Reference Example

EP 2 390 048 B1

Table 4

| | Sample no. | Structure of welded structure (FIGS. 2, 5, 6, 7) | Steel plate no. (from Table 1) | Steel plate welded joint | | | | | | | | | Insert material | | | | | | | Steel plate properties of insert material | | |
|---|---|---|---|---|---|---|---|---|---|---|---|---|---|---|---|---|---|---|---|---|---|---|
| | | | | Plate thickness T (mm) | Weld input heat (kJ/cm) | Weld metal zone width d (mm) | Location (see symbols in FIGS. 2, 5, 6, 7) | Brittle crack arrest property Kca of base metal part ($N/mm^{1.5}$) | vTrs of base metal part (°C) | Location (see symbols in FIGS. 2, 5, 6, 7) | Brittle crack arrest property Kca of base metal part ($N/mm^{1.5}$) | vTrs1 of base metal part (lower region) (°C) | Main counter-ing side angle θ1 (°) | Auxiliary counter-ing side angle θ2 (°) | Dimensions (mm) | | | Sign judgment formula W-3.2 d-50 | Steel plate no. (from Table 1) | Brittle crack arrest property Kca ($N/mm^{1.5}$) | Brittle-to-ductile fracture transition temperature vTrs2 (°C) |
| | | | | | | | | | | | | | | | Width W | Height H | Plate thickness t | | | | |
| Inv. ex. | 30 | FIG. 6 | P10/P12 | 70 | 450 | 40 | 21,23 | 2300 | -50 | 22,24 | 4200 | -75 | 33 | 90 | 270 | 210 | 70 | 92 | P10 | 2300 | -50 |
| | 31 | FIG. 6 | P10/P9 | 70 | 450 | 40 | 21,23 | 2300 | -50 | 22,24 | 6300 | -90 | 33 | 90 | 270 | 210 | 70 | 92 | P10 | 2300 | -50 |
| | 32 | FIG. 6 | P11/P9 | 70 | 450 | 40 | 21,23 | 6200 | -70 | 22,24 | 6300 | -90 | 30 | 90 | 350 | 300 | 70 | 172 | P10 | 2300 | -50 |
| | 33 | FIG. 7 | P7/P5 | 60 | 80 | 60 | 31,33 | 6300 | -90 | 32,34 | 7000 | -100 | 40 | 90 | 250 | 150 | 60 | 8 | P6 | 2300 | -50 |
| | 34 | FIG. 7 | P7/P5 | 60 | 80 | 60 | 31,33 | 6300 | -90 | 32,34 | 7000 | -100 | 40 | 90 | 250 | 150 | 60 | 8 | P6 | 2300 | -50 |
| *1 | 35 | FIG. 2 | P1 | 50 | 320 | 44 | 1 (Note 1) | 3900 | -60 | 1A | 4200 | -75 | 34 | 90 | 200 | 150 | 50 | 9 | P3 | 3900 | -60 |
| Comp. ex. | 1 | FIG. 5 | P9 | 70 | 460 | 10 | 10 | 6300 | -90 | - | - | - | 13 | 90 | 140 | 300 | 70 | -19 | P9 | 6300 | 10 |
| | 2 | FIG. 5 | P9 | 70 | 450 | 34 | 10 | 6300 | -90 | - | - | - | 14 | 90 | 220 | 450 | 70 | 61.2 | P9 | 6300 | -90 |
| | 3 | FIG. 5 | P9 | 70 | 450 | 34 | 10 | 6300 | -90 | - | - | - | 51 | 90 | 1100 | 450 | 70 | 941.2 | P9 | 6300 | -90 |
| | 4 | FIG. 5 | P9 | 70 | 460 | 35 | 10 | 6300 | -90 | - | - | - | 35 | 69 | 680 | 450 | 70 | 518 | P9 | 6300 | -90 |
| | 5 | FIG. 5 | P9 | 70 | 460 | 35 | 10 | 6300 | -90 | - | - | - | 35 | 112 | 860 | 450 | 70 | 693 | P9 | 6300 | -90 |
| | 6 | FIG. 5 | P13 | 100 | 550 | 42 | 10 | 7000 | -100 | - | - | - | 51 | 90 | 500 | 200 | 60 | 316 | P3 | 2300 | -50 |
| | 7 | FIG. 5 | P10 | 70 | 550 | 42 | 10 | 2300 | -50 | - | - | - | 66 | 90 | 450 | 100 | 50 | 266 | P3 | 3900 | -60 |
| | 8 | FIG. 5 | P10 | 70 | 550 | 42 | 10 | 2300 | -50 | - | - | - | 37 | 90 | 300 | 200 | 70 | 116 | P10 | 2300 | -50 |
| | 9 | FIG. 6 | P10/P10 | 70 | 450 | 40 | 21,23 | 2300 | -50 | 22,24 | 2300 | -50 | 30 | 90 | 350 | 300 | 70 | 172 | P14 | 7000 | -100 |
| | 10 | FIG. 6 | P11/P9 | 70 | 450 | 40 | 21,23 | 6200 | -70 | 22,24 | 6300 | -90 | 7 | 90 | 70 | 300 | 70 | -108 | P14 | 7000 | -100 |
| | 11 | FIG. 6 | P10/P12 | 70 | 450 | 40 | 21,23 | 2300 | -50 | 22,24 | 4200 | -75 | 53 | 90 | 270 | 100 | 70 | 92 | P12 | 4200 | -75 |
| | 12 | FIG. 7 | P6/P7 (Note 2) | 60 | 380 | 30 | 31,33 | 2300 | -50 | 32,34 | 6300 | -90 | 34 | 90 | 200 | 150 | 60 | 54 | A4 | 7000 | -100 |
| | 13 | FIG. 2 | P3 | 50 | 320 | 28 | 1 (Note 1) | 3900 | -60 | 1A | 3900 | -60 | 34 | 90 | 200 | 150 | 50 | 60.4 | A3 | 7000 | -100 |

*Reference Example

Table 5 (Continued From Table 4)

| | Sample no. | Insert material welded joint | | | | Welding conditions and vTrs4 of weld metal zone forming small steel plate welded joint | | | | Results of evaluation of brittle crack propagation resistance of welded structure | | | | |
|---|---|---|---|---|---|---|---|---|---|---|---|---|---|---|
| | | Weld input heat (kJ/mm) | Joint width (mm) | Brittle-to-ductile fracture transition temperature vTrs3 (weld metal zone) (°C) | Sign judgment formula [2] vTrs1-20-vTrs3 | Weld input heat (kJ/cm) | Width of weld metal zone (mm) | Brittle-to-ductile fracture transition temperature vTrs4 (weld metal zone) (°C) | Sign judgment formula [4] vTrs1-20-vTrs4 | Test load stress (N/mm²) | Sign judgment formula [0] vTrs1-vTrs3 | State of progression of brittle crack (see symbols in FIG. 2) | Crack arrest performance | Score based on crack arrest distance |
| Inv.ex.*1 | 30 | 2.8 | 33 | -70 | 0 | - | - | - | | 262 | 20 | [b] | Crack arrested | 3 |
| | 31 | 2.8 | 33 | -70 | 0 | - | - | - | | 262 | 20 | [b] | Crack arrested | 3 |
| | 32 | 2.3 | 33 | -90 | 0 | - | - | - | | 262 | 20 | [b] | Crack arrested | 5 |
| | 33 | 2.8 | 35 | -70 | -40 | 50 | 36 | -125 | 15 | 262 | -20 | [b] | Crack arrested | 3 |
| | 34 | 2.7 | 35 | -70 | -40 | 50 | 36 | -125 | 15 | 262 | -20 | [b] | Crack arrested | 3 |
| | 35 | 2.8 | 32 | -80 | 0 | - | - | - | | 262 | 20 | [b] | Crack arrested | 4 |
| Comp.ex | 1 | 3.5 | 30 | -60 | -50 | - | - | - | | 262 | -30 | [c] | Crack not arrested | F (Note 7) |
| | 2 | 2.5 | 42 | -110 | 0 | - | - | - | | 262 | 20 | [c] | Crack not arrested | F |
| | 3 | 2.5 | 42 | -110 | 0 | - | - | - | | 262 | 20 | [c] | Crack not arrested | F |
| | 4 | 2.5 | 42 | -110 | 0 | - | - | - | | 262 | 20 | [c] | Crack not arrested | F |
| | 5 | 2.5 | 42 | -110 | 0 | - | - | - | | 262 | 20 | [c] | Crack not arrested | F |
| | 6 | 3.5 | 30 | -80 | -40 | - | - | - | | 262 | -20 | [c] | Crack not arrested | F |
| | 7 | 3.5 | 30 | -65 | -5 | - | - | - | | 262 | 15 | [c] | Crack not arrested | F |
| | 8 | 3.3 | 30 | -70 | 0 | - | - | - | | 262 | 20 | [c] | Crack not arrested | F |
| | 9 | 3.3 | 33 | -70 | 0 | - | - | - | | 262 | 20 | [c] | Crack not arrested | F |
| | 10 | 3.6 | 33 | -55 | -35 | - | - | - | | 262 | -15 | [c] | Crack not arrested | F |
| | 11 | 3.6 | 33 | -50 | -20 | - | - | - | | 262 | 0 | [c] | Crack not arrested | F |
| | 12 | 3.0 | 35 | -120 | 50 | 50 | 36 | -60 | -10 | 262 | 70 | [c] | Crack not arrested | F |
| | 13 | 2.5 | 32 | -140 | 60 | - | - | - | - | 262 | 80 | [c] | Crack not arrested | F |

Note 7: Symbol "F" means full fracture of joint test piece.

*Reference Example

EP 2 390 048 B1

Note that, in Tables 2 and 4, the contents of notes 1 to 4 are as follows:

Note 1: Means region other than region 1A in steel plate 1.
Note 2: Means combination of two types of steel plates based on the figures.
Note 3: Butt welding X-groove dividing plate thickness to 4:1 from two surfaces of steel plate by electro gas arc welding. Shows the larger amount of input heat applied at that time.
Note 4: Butt welding half of the plate thickness at a time from the two surfaces of the steel plate by electro gas arc welding. Shows the amount of input heat at that time.

Results of Evaluation

As shown in Tables 2 to 5, Reference Examples 1 to 29 are examples relating to the welded structure B of the second reference structure 2 shown in FIG. 5, Invention Examples 30 to 32 are examples relating to the welded structure C of the first embodiment of the present invention shown in FIG. 6, Invention Examples 33 and 34 are examples relating to the welded structure D of the second embodiment shown in FIG. 7, and Reference Example 35 is an example relating to the welded structure A of the reference structure 1 shown in FIG. 2.
Further, Comparative Examples 1 to 8 which are shown in Tables 4 and 5 are comparative examples having similar structures to the welded structure B, Comparative Examples 9 to 11 is a comparative example having a similar structure to the welded structure C, Comparative Example 12 is a comparative example having a similar structure to the welded structure D, and Comparative Example 13 is a comparative example having a similar structure to the welded structure A.
As shown in Tables 2 and 3, the welded structures according to the reference structure 2 (Reference Examples 1 to 29) had results of propagation of brittle cracks all of the type [b]. Due to this, it could be confirmed that in the welded structures, even if brittle cracks occur in the welded joints, the cracks can be kept from propagating through the welded joints or the base metal, fracture of the welded structures can be prevented, and excellent resistance to brittle crack propagation can be obtained.
As opposed to this, the welded structures of Comparative Examples 1 to 13 have at least one of the properties of the base metal of the steel plate, the shape of the insert member, or the properties of the insert welded joint not satisfying the provisions of the present invention, so are examples where the results of resistance to brittle crack propagation are all of the type [c] and where progression of the brittle crack cannot be arrested.
The welded structure of Comparative Example 1 is an example of an insufficient horizontal width W of the insert member and, further, an unsuitable angle $\theta1$ of the slanted outer edge of the insert member.
Comparative Examples 2 and 3 are examples of unsuitable angles $\theta1$, while Comparative Examples 4 and 5 are examples of unsuitable angles $\theta1$ of the outer edges of the auxiliary brittle crack countering sides of the insert members.
Comparative Example 6 is an example of an insufficient plate thickness "t" of the insert member and unsuitable angle $\theta2$ of the outer edge of the auxiliary countering side.
Comparative Example 7 is an example of an insufficient Kca value of the base metal part of the steel plate welded joint (steel plate base metal), insufficient plate thickness of the insert member, and unsuitable angle $\theta1$ of the slanted outer edge.
Comparative Examples 8 and 9 are examples of insufficient Kca values of the base metal part of the steel plate welded joint (steel plate base metal), while Comparative Examples 10 and 11 are examples of unsuitable angles $\theta1$ of the slanted outer edges.
Comparative Example 12 is an example of an unsuitable brittle-to-ductile fracture transition temperature vTrs4 of the weld metal zone, while Comparative Example 13 is an example of an unsuitable brittle crack arrest property Kca of the region 1A.
From the above results, it is clear that with the welded structure of the present invention, even if a brittle crack occurs in the welded joint, it is possible to keep the crack from being propagated through the welded joint or the base metal and possible to prevent fracture of the welded structure. It is clear that this has excellent resistance to brittle crack propagation.
Reference Signs used in the description are listed below:

A, B, C, D: welded structures,
1, 10, 10A, 10B: steel plates,
1A: region (at least location of steel plate where ends of insert member and insert welded joint in horizontal width direction face each other),
2, 20, 20A, 20B. steel plate welded joints,
3, 3a, 3b: through holes,
4: crack control part,
5: insert member,

51, 52: slanted outer edge extending from main brittle crack countering side of insert member,

51a, 51b: back end of slanted outer edge of insert member (end of insert member in horizontal width direction),

53. outer edge of insert member forming auxiliary countering side against brittle crack,

6, 60: insert welded joint,

25, 26, 35, 36. small steel plate welded joints,

21, 22, 23, 24, 31, 32, 33, 34: small steel plates,

70: ship structure,

L: weld line,

$\theta1$: slant angle of slanted outer edge of insert member with respect to longitudinal direction of steel plate welded joint, and

$\theta2$. angle of intersection of outer edge of auxiliary brittle crack countering side of insert member with steel plate welded joint.

## Claims

1. A welded structure having excellent brittle crack propagation resistance wherein steel plates (10) having at least partial regions with a brittle crack arrest property Kca of 4000 N/mm$^{1.5}$ or more are butt welded together so as to form a steel plate welded joint (20A), wherein

at least one location of said steel plate welded joint (20A) is provided with a crack control part (4) which diverts a brittle crack which has occurred at the steel plate welded joint (20A) to a steel plate base metal side,

said crack control part has an insert member (5) which is inserted in a through hole which is formed spanning from said steel plate welded joint to said steel plates (10) and which diverts a propagation direction of a brittle crack to the steel plate base metal side and an insert welded joint (6) which is formed by butt welding of outer edges (51, 52, 53) of said insert member (5) and the facing steel plate base metal, said welded structure being **characterized in that**

said insert member (5) is formed so that dimensions of a width W (mm) in a direction intersecting a longitudinal direction of said steel plate welded joint (20A) and a plate thickness "t" (mm) satisfy a relationship shown by the following formulas (1) and (2),

outer edges (51, 52) of said insert member (5) at a brittle crack main countering side extend from a weld metal zone of said steel plate welded joint (20A) to the two sides of said steel plate welded joint (20A) while slanted by an angle $\theta1$ of 15° to 50° with respect to the longitudinal direction of the steel plate welded joint (20A) and another outer edge (53) at a brittle crack auxiliary countering side intersects said steel plate welded joint (20A) by an angle $\theta2$ of 70° to 110°,

a relationship between a brittle-to-ductile fracture transition temperature vTrs3 (°C) which expresses a toughness of the weld metal zone at said insert welded joint (6) and a brittle-to-ductile fracture transition temperature vTrs1 (°C) which expresses a base metal toughness of said steel plate satisfies a relationship expressed by the following formula:

$$vTrs3 \leq vTrs1 - 20,$$

and

said crack control part (4) is provided so that at least a horizontal width direction end of said insert member faces a region of said steel plate where the Kca is 4000 N/mm$^{1.5}$ or more,

each of said steel plate comprises at least two steel plates (21, 22, 23, 24) which are aligned in a longitudinal direction of said steel plate welded joint (20A), said longitudinal aligned steel plates being butt welded together so as to form a longitudinal aligned plate welded joint (25, 26), and

said crack control part (4) is provided so that said insert welded joint (6) which is formed at the horizontal width direction end side of said insert member (5) is contiguous with said longitudinal aligned plate welded joint (25, 26),

$$3.2d+50 \leq W \ \ldots\ldots (1)$$

$$0.95T \leq t \quad \ldots\ldots (2)$$

where, in the above formulas (1) and (2), "t" (mm) expresses a plate thickness of said steel plate (10), while "d" (mm) expresses a width of a weld metal zone at said steel plate welded joint (20A).

2. A welded structure having excellent brittle crack propagation resistance wherein steel plates (10) having at least partial regions with a brittle crack arrest property Kca of 4000 N/mm$^{1.5}$ or more are butt welded together so as to form a steel plate welded joint (20B), wherein

at least one location of said steel plate welded joint (20B) is provided with a crack control part (4) which diverts a brittle crack which has occurred at the steel plate welded joint (20B) to a steel plate base metal side,

said crack control part has an insert member (5) which is inserted in a through hole which is formed spanning from said steel plate welded joint to said steel plates (10) and which diverts a propagation direction of a brittle crack to the steel plate base metal side and an insert welded joint (6) which is formed by butt welding of outer edges (51, 52, 53) of said insert member (5) and the facing steel plate base metal, said welded structure being **characterized in that**

said insert member is formed so that dimensions of a width W (mm) in a direction intersecting a longitudinal direction of said steel plate welded joint (20B) and a plate thickness "t" (mm) satisfy a relationship shown by the following formulas (1) and (2),

outer edges (51, 52) of said insert member (5) at a brittle crack main countering side extend from a weld metal zone of said steel plate welded joint (20A) to the two sides of said steel plate welded joint (20B) while slanted by an angle θ1 1 of 15° to 50° with respect to the longitudinal direction of the steel plate welded joint (20B) and another outer edge (53) at a brittle crack auxiliary countering side intersects said steel plate welded joint (20B) by an angle θ2 of 70° to 110°,

a relationship between a brittle-to-ductile fracture transition temperature vTrs3 (°C) which expresses a toughness of the weld metal zone at said insert welded joint (60) and a brittle-to-ductile fracture transition temperature vTrs1 (°C) which expresses a base metal toughness of said steel plate satisfies a relationship expressed by the following formula:

$$vTrs3 \leq vTrs1 - 20,$$

and

said crack control part (4) is provided so that at least a horizontal width direction end of said insert member faces a region of said steel plate where the Kca is 4000N/mm$^{1.5}$ or more,

each of said steel plate comprises at least two steel plates (31, 32, 33, 34) which are aligned in a longitudinal direction of said steel plate welded joint (20A), said longitudinal aligned steel plates being butt welded together so as to form a longitudinal aligned plate welded joint (35, 36), and

said crack control part (4) is provided so that said insert welded joint (60) which is formed at the horizontal width direction end side of said insert member (5) includes said longitudinal aligned plate welded joint (35, 36), and

a relationship between a brittle-to-ductile fracture transition temperature vTrs4 (°C) which expresses a toughness of the weld metal zone at said longitudinal aligned plate welded joint (35, 36) and a brittle-to-ductile fracture transition temperature vTrs1 (°C) which expresses a base metal toughness of said steel plate (10) satisfies a relationship expressed by the following formula:

$$vTrs4 \leq vTrs1 - 20$$

$$3.2d+50 \leq W \ ..... (1)$$

$$0.95T \leq t \qquad ..... (2)$$

where, in the above formulas (1) and (2), "t" (mm) expresses a plate thickness of said steel plate (10), while "d" (mm) expresses a width of a weld metal zone at said steel plate welded joint (20B).

3. A welded structure having excellent brittle crack propagation resistance as set forth in claim 1 or 2, **characterized in that** said steel plate (10) has a plate thickness of 25 mm to 150 mm.

**4.** A welded structure having excellent brittle crack propagation resistance as set forth in claim 1 or 2, **characterized in that** said steel plate (10) has at least a partial region where a brittle crack arrest property Kca is 6000 N/mm[1.5] or more and **in that** said crack control part (4) is provided so that at least a horizontal width direction end of said insert member (5) faces a region of said steel plate (10) where the Kca is 6000 N/mm[1.5] or more.

**Patentansprüche**

**1.** Schweißkonstruktion mit ausgezeichneter Sprödriss-Ausbreitungsfestigkeit, wobei Stahlbleche (10), die mindestens Teilbereiche mit einem Sprödriss-Auffangvermögen Kca von mindestens 4000 N/mm[1,5] haben, miteinander stumpf verschweißt sind, um eine Stahlblech-Schweißverbindung (20A) zu bilden, wobei mindestens eine Stelle der Stahlblech-Schweißverbindung (20A) mit einem Risseindämmteil (4) versehen ist, das einen Sprödriss, der an der Stahlblech-Schweißverbindung (20A) aufgetreten ist, zu einer Stahlblech-Grundmetallseite ableitet,

das Risseindämmteil aufweist: ein Einsatzbauteil (5), das in ein Durchgangsloch eingesetzt ist, das von der Stahlblech-Schweißverbindung zu den Stahlblechen (10) überspannend gebildet ist und das eine Ausbreitungsrichtung eines Sprödrisses zur Stahlblech-Grundmetallseite ableitet, und eine Einsatzschweißverbindung (6), die durch Stumpfverschweißen von Außenkanten (51, 52, 53) des Einsatzbauteils (5) und des gegenüberliegenden Stahlblech-Grundmetalls gebildet ist, wobei die Schweißkonstruktion **dadurch gekennzeichnet ist, dass**

das Einsatzbauteil (5) so ausgebildet ist, dass Maße einer Breite W (mm) in einer Richtung, die eine Längsrichtung der Stahlblech-Schweißverbindung (20A) schneidet, und einer Blechdicke "t" (mm) eine durch die nachstehenden Formeln (1) und (2) angegebene Beziehung erfüllen,

sich Außenkanten (51, 52) des Einsatzbauteils (5) an einer Sprödriss-Hauptbekämpfungsseite von einer Schweißmetallzone der Stahlblech-Schweißverbindung (20A) zu den beiden Seiten der Stahlblech-Schweißverbindung (20A) erstrecken, während sie in einem Winkel θ1 von 15° bis 50° im Hinblick auf die Längsrichtung der Stahlblech-Schweißverbindung (20A) geneigt sind, und eine weitere Außenkante (53) an einer Sprödriss-Nebenbekämpfungsseite die Stahlblech-Schweißverbindung (20A) in einem Winkel θ2 von 70° bis 110° schneidet,

eine Beziehung zwischen einer Sprödbruch-Verformungsbruch-Übergangstemperatur vTrs3 (°C), die eine Zähigkeit der Schweißmetallzone an der Einsatzschweißverbindung (6) ausdrückt, und einer Sprödbruch-Verformungsbruch-Übergangstemperatur vTrs1 (°C), die eine Grundmetallzähigkeit des Stahlblechs ausdrückt, eine Beziehung erfüllt, die durch die folgende Formel ausgedrückt ist:

$$vTrs3 \leq vTrs1 - 20,$$

und

das Risseindämmteil (4) so vorgesehen ist, dass mindestens ein Horizontalbreitenrichtungsende des Einsatzbauteils zu einem Bereich des Stahlblechs weist, in dem Kca mindestens 4000 N/mm[1,5] beträgt,

jedes Stahlblech mindestens zwei Stahlbleche (21, 22, 23, 24) aufweist, die in Längsrichtung der Stahlblech-Schweißverbindung (20A) ausgerichtet sind, wobei die längs ausgerichteten Stahlbleche miteinander stumpf verschweißt sind, um eine längs ausgerichtete Blechschweißverbindung (25, 26) zu bilden, und

das Risseindämmteil (4) so vorgesehen ist, dass die Einsatzschweißverbindung (6), die an der Horizontalbreitenrichtungsendseite des Einsatzbauteils (5) gebildet ist, mit der längs ausgerichteten Blechschweißverbindung (25, 26) zusammenhängt,

$$3{,}2d + 50 \leq W \qquad\qquad (1),$$

$$0{,}95T \leq t \qquad\qquad (2),$$

wobei in den vorstehenden Formeln (1) und (2) "t" (mm) eine Blechdicke des Stahlblechs (10) ausdrückt, während "d" (mm) eine Breite einer Schweißmetallzone an der Stahlblech-Schweißverbindung (20A) ausdrückt.

**2.** Schweißkonstruktion mit ausgezeichneter Sprödriss-Ausbreitungsfestigkeit, wobei Stahlbleche (10), die mindestens Teilbereiche mit einem Sprödriss-Auffangvermögen Kca von mindestens 4000 N/mm[1,5] haben, miteinander stumpf verschweißt sind, um eine Stahlblech-Schweißverbindung (20B) zu bilden, wobei mindestens eine Stelle der Stahlblech-Schweißverbindung (20B) mit einem Risseindämmteil (4) versehen ist, das einen Sprödriss, der an der Stahlblech-Schweißverbindung (20B) aufgetreten ist, zu einer Stahlblech-Grundmetallseite ableitet,

das Risseindämmteil aufweist: ein Einsatzbauteil (5), das in ein Durchgangsloch eingesetzt ist, das von der Stahlblech-Schweißverbindung zu den Stahlblechen (10) überspannend gebildet ist und das eine Ausbreitungsrichtung eines Sprödrisses zur Stahlblech-Grundmetallseite ableitet, und eine Einsatzschweißverbindung (6), die durch Stumpfverschweißen von Außenkanten (51, 52, 53) des Einsatzbauteils (5) und des gegenüberliegenden Stahlblech-Grundmetalls gebildet ist, wobei die Schweißkonstruktion **dadurch gekennzeichnet ist, dass**

das Einsatzbauteil so ausgebildet ist, dass Maße einer Breite W (mm) in einer Richtung, die eine Längsrichtung der Stahlblech-Schweißverbindung (20B) schneidet, und einer Blechdicke "t" (mm) eine durch die nachstehenden Formeln (1) und (2) angegebene Beziehung erfüllen,

sich Außenkanten (51, 52) des Einsatzbauteils (5) an einer Sprödriss-Hauptbekämpfungsseite von einer Schweißmetallzone der Stahlblech-Schweißverbindung (20A) zu den beiden Seiten der Stahlblech-Schweißverbindung (20B) erstrecken, während sie in einem Winkel θ1 von 15° bis 50° im Hinblick auf die Längsrichtung der Stahlblech-Schweißverbindung (20B) geneigt sind, und eine weitere Außenkante (53) an einer Sprödriss-Nebenbekämpfungsseite die Stahlblech-Schweißverbindung (20B) in einem Winkel θ2 von 70° bis 110° schneidet,

eine Beziehung zwischen einer Sprödbruch-Verformungsbruch-Übergangstemperatur vTrs3 (°C), die eine Zähigkeit der Schweißmetallzone an der Einsatzschweißverbindung (60) ausdrückt, und einer Sprödbruch-Verformungsbruch-Übergangstemperatur vTrs1 (°C), die eine Grundmetallzähigkeit des Stahlblechs ausdrückt, eine Beziehung erfüllt, die durch die folgende Formel ausgedrückt ist:

$$vTrs3 \leq vTrs1 - 20,$$

und

das Risseindämmteil (4) so vorgesehen ist, dass mindestens ein Horizontalbreitenrichtungsende des Einsatzbauteils zu einem Bereich des Stahlblechs weist, in dem Kca mindestens 4000 N/mm$^{1,5}$ beträgt,

jedes Stahlblech mindestens zwei Stahlbleche (31, 32, 33, 34) aufweist, die in Längsrichtung der Stahlblech-Schweißverbindung (20A) ausgerichtet sind, wobei die längs ausgerichteten Stahlbleche miteinander stumpf verschweißt sind, um eine längs ausgerichtete Blechschweißverbindung (35, 36) zu bilden, und

das Risseindämmteil (4) so vorgesehen ist, dass die Einsatzschweißverbindung (60), die an der Horizontalbreitenrichtungsendseite des Einsatzbauteils (5) gebildet ist, die längs ausgerichtete Blechschweißverbindung (35, 36) aufweist, und

eine Beziehung zwischen einer Sprödbruch-Verformungsbruch-Übergangstemperatur vTrs4 (°C), die eine Zähigkeit der Schweißmetallzone an der längs ausgerichteten Blechschweißverbindung (35, 36) ausdrückt, und einer Sprödbruch-Verformungsbruch-Übergangstemperatur vTrs1 (°C), die eine Grundmetallzähigkeit des Stahlblechs (10) ausdrückt, eine Beziehung erfüllt, die durch die folgende Formel ausgedrückt ist:

$$vTrs4 \leq vTrs1 - 20,$$

$$3{,}2d + 50 \leq W \qquad\qquad (1),$$

$$0{,}95T \leq t \qquad\qquad (2),$$

wobei in den vorstehenden Formeln (1) und (2) "t" (mm) eine Blechdicke des Stahlblechs (10) ausdrückt, während "d" (mm) eine Breite einer Schweißmetallzone an der Stahlblech-Schweißverbindung (20B) ausdrückt.

**3.** Schweißkonstruktion mit ausgezeichneter Sprödriss-Ausbreitungsfestigkeit nach Anspruch 1 oder 2, **dadurch gekennzeichnet, dass** das Stahlblech (10) eine Blechdicke von 25 mm bis 150 mm hat.

**4.** Schweißkonstruktion mit ausgezeichneter Sprödriss-Ausbreitungsfestigkeit nach Anspruch 1 oder 2, **dadurch gekennzeichnet, dass** das Stahlblech (10) mindestens einen Teilbereich hat, in dem ein Sprödriss-Auffangvermögen Kca mindestens 6000 N/mm$^{1,5}$ beträgt, und dadurch, dass das Risseindämmteil (4) so vorgesehen ist, dass mindestens ein Horizontalbreitenrichtungsende des Einsatzbauteils (5) zu einem Bereich des Stahlblechs (10) weist, in dem Kca mindestens 6000 N/mm$^{1,5}$ beträgt.

**Revendications**

1. Structure soudée dotée d'une excellente résistance à la propagation de fissure par fragilité, où dés plaques d'acier (10) présentant au moins en partie des zones ayant une caractéristique d'arrêt de fissure par fragilité Kca égale ou supérieure à 4000N/mm$^{1,5}$ sont soudées bout-à-bout entre elles pour former un joint soudé de plaque d'acier (20A), au moins un emplacement du joint soudé de plaque d'acier (20A) étant prévu avec une partie de limitation de fissure (4) qui dévie une fissure par fragilité apparue sur le joint soudé de plaque d'acier (20A) vers un côté de métal de base de plaque d'acier,

la partie de limitation de fissure présentant un élément d'insertion (5) inséré dans un trou traversant qui s'étend du joint soudé de plaque d'acier aux plaques d'acier (10) et qui dévie une direction de propagation d'une fissure par fragilité vers le côté de métal de base de plaque d'acier, et un joint soudé d'insert (6) formé par soudage bout-à-bout de bords extérieurs (51, 52, 53) de l'élément d'insertion (5) et le métal de base de plaque d'acier opposée, ladite structure soudée étant **caractérisée**

**en ce que** l'élément d'insertion (5) est formé de telle manière que des dimensions de largeur W (en mm) dans une direction croisant une direction longitudinale du joint soudé de plaque d'acier (20A), et d'épaisseur de plaque « t » (en mm) satisfassent à une relation représentée par les formules (1) et (2) suivantes,

des bords extérieurs (51, 52) de l'élément d'insertion (5) sur un côté d'opposition principal à la fissure par fragilité s'étendent d'une zone de métal d'apport du joint soudé de plaque d'acier (20A) vers les deux côtés dudit joint soudé de plaque d'acier (20A) en étant inclinés suivant un angle θ1 compris entre 15° et 50° par rapport à la direction longitudinale du joint soudé de plaque d'acier (20A), et un autre bord extérieur (53) sur un côté d'opposition secondaire à la fissure par fragilité croise le joint soudé de plaque d'acier (20A) suivant un angle θ2 compris entre 70° et 110°, une relation entre une température de transition fragile-ductile vTrs3 (en °C) exprimant une ténacité de la zone de métal d'apport sur le joint soudé d'insert (6) et une température de transition fragile-ductile vTrs1 (en ° C) exprimant une ténacité du métal de base de la plaque d'acier satisfait à une relation exprimée par la formule suivante :

$$vTrs3 \leq vTrs1\text{-}20,$$

et

la partie de limitation de fissure (4) est prévue de telle manière qu'au moins une extrémité dans le sens de la largeur horizontale de l'élément d'insertion soit opposée à une zone de la plaque d'acier où la caractéristique Kca est égale ou supérieure à 4000 N/mm$^{1,5}$,

chaque plaque d'acier comprend au moins deux plaques d'acier (21, 22, 23, 24) alignées dans une direction longitudinale du joint soudé de plaque d'acier (20A), les plaques d'acier alignées longitudinalement étant soudées bout-à-bout entre elles de manière à former un joint soudé aligné longitudinalement (25, 26), et

la partie de limitation de fissure (4) est prévue de telle manière que le joint soudé d'insert (6) formé côté extrémité dans le sens de la largeur horizontale de l'élément d'insertion (5) est contigu au joint soudé aligné longitudinalement (25, 26),

$$3{,}2d+50 \leq W \ \text{.....} \qquad (1)$$

$$0{,}95T \leq t \ \text{.....} \qquad (2)$$

« t » (en mm) représentant, dans les formules (1) et (2) ci-dessus, une épaisseur de plaque de la plaque d'acier (10), « d » (en mm) une largeur d'une zone de métal d'apport sur le joint soudé de plaque d'acier (20A).

2. Structure soudée dotée d'une excellente résistance à la propagation de fissure par fragilité, où des plaques d'acier (10) présentant au moins en partie des zones ayant une caractéristique d'arrêt de fissure par fragilité Kca égale ou supérieure à 4000N/mm$^{1,5}$ sont soudées bout-à-bout entre elles pour former un joint soudé de plaque d'acier (20B), au moins un emplacement du joint soudé de plaque d'acier (20B) étant prévu avec une partie de limitation de fissure (4) qui dévie une fissure par fragilité apparue sur le joint soudé de plaque d'acier (20B) vers un côté de métal de base de plaque d'acier,

la partie de limitation de fissure présentant un élément d'insertion (5) inséré dans un trou traversant qui s'étend du joint soudé de plaque d'acier aux plaques d'acier (10) et qui dévie une direction de propagation d'une fissure par fragilité vers le côté de métal de base de plaque d'acier, et un joint soudé d'insert (6) formé par soudage bout-à-bout de bords extérieurs (51, 52, 53) de l'élément d'insertion (5) et le métal de base de plaque d'acier opposée, ladite structure soudée étant **caractérisée**

**en ce que** l'élément d'insertion est formé de telle manière que des dimensions de largeur W (en mm) dans une direction croisant une direction longitudinale du joint soudé de plaque d'acier (20B), et d'épaisseur de plaque « t » (en mm) satisfassent à une relation représentée par les formules (1) et (2) suivantes,

des bords extérieurs (51, 52) de l'élément d'insertion (5) sur un côté d'opposition principal à la fissure par fragilité s'étendent d'une zone de métal d'apport du joint soudé de plaque d'acier (20A) vers les deux côtés dudit joint soudé de plaque d'acier (20B) en étant inclinés suivant un angle $\theta 1$ compris entre 15° et 50° par rapport à la direction longitudinale du joint soudé de plaque d'acier (20B), et un autre bord extérieur (53) sur un côté d'opposition secondaire à la fissure par fragilité croise le joint soudé de plaque d'acier (20B) suivant un angle $\theta 2$ compris entre 70° et 110°, une relation entre une température de transition fragile-ductile vTrs3 (en °C) exprimant une ténacité de la zone de métal d'apport sur le joint soudé d'insert (60) et une température de transition fragile-ductile vTrs1 (en ° C) exprimant une ténacité du métal de base de la plaque d'acier satisfait à une relation exprimée par la formule suivante :

vTrs3 $\leq$ vTrs1-20, et
la partie de limitation de fissure (4) est prévue de telle manière qu'au moins une extrémité dans le sens de la largeur horizontale de l'élément d'insertion soit opposée à une zone de la plaque d'acier où la caractéristique Kca est égale ou supérieure à 4000 N/mm[1,5],

chaque plaque d'acier comprend au moins deux plaques d'acier (31, 32, 33, 34) alignées dans une direction longitudinale du joint soudé de plaque d'acier (20A), les plaques d'acier alignées longitudinalement étant soudées bout-à-bout entre elles de manière à former un joint soudé aligné longitudinalement (35, 36), et
la partie de limitation de fissure (4) est prévue de telle manière que le joint soudé d'insert (60) formé côté extrémité dans le sens de la largeur horizontale de l'élément d'insertion (5) inclut le joint soudé aligné longitudinalement (35, 36), et

une relation entre une température de transition fragile-ductile vTrs4 (en °C) exprimant une ténacité de la zone de métal d'apport sur le joint soudé de plaque d'acier aligné longitudinalement (35, 36) et une température de transition fragile-ductile vTrs1 (en °C) exprimant une ténacité du métal de base de la plaque d'acier (10) satisfait à une relation exprimée par la formule suivante :

$$vTrs4 \leq vTrs1\text{-}20$$

$$3,2d+50 \leq W \; ..... \qquad (1)$$

$$0,95T \leq t \; ..... \qquad (2)$$

« t » (en mm) représentant, dans les formules (1) et (2) ci-dessus, une épaisseur de plaque de la plaque d'acier (10), « d » (en mm) une largeur d'une zone de métal d'apport sur le joint soudé de plaque d'acier (20B).

3. Structure soudée dotée d'une excellente résistance à la propagation de fissure par fragilité selon la revendication 1 ou la revendication 2, **caractérisée en ce que** la plaque d'acier (10) présente une épaisseur de plaque comprise entre 25 mm et 150 mm.

4. Structure soudée dotée d'une excellente résistance à la propagation de fissure par fragilité selon la revendication 1 ou la revendication 2, **caractérisée en ce que** la plaque d'acier (10) présente au moins une zone partielle où une caractéristique d'arrêt de fissure par fragilité Kca est égale ou supérieure à 6000 N/mm[1,5], et **en ce que** la partie de limitation de fissure (4) est prévue de telle manière qu'au moins une extrémité dans le sens de la largeur horizontale de l'élément d'insertion (5) soit opposée à une zone de la plaque d'acier (10) où la caractéristique Kca est égale ou supérieure à 6000 N/mm[1,5].

# F i g.1

# Fig.2

# Fig.3

## (a)

## (b)

# Fig.4

# Fig.5

# Fig.6

# Fig.7

# Fig. 8

(a)

(b)

(c)

# Fig.9

(a)

90

7500

2500

2500

A,B,C,D

(b)

A

200

400

81

1000

5

(c)

C

200

400

81

1000

5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005131708 A
- JP 2007098441 A
- JP 2005319516 A
- JP 2007302993 A
- JP 008248382 A